(19) **Europäisches Patentamt / European Patent Office / Office européen des brevets**

(11) **EP 4 657 559 A1**

(12) **EUROPEAN PATENT APPLICATION**
published in accordance with Art. 153(4) EPC

(43) Date of publication:
03.12.2025 Bulletin 2025/49

(21) Application number: 24864387.6

(22) Date of filing: 16.08.2024

(51) International Patent Classification (IPC):
$H01M\ 4/36$ (2006.01)  $H01M\ 4/62$ (2006.01)
$H01M\ 4/505$ (2010.01)  $H01M\ 4/525$ (2010.01)
$H01M\ 4/131$ (2010.01)  $H01M\ 10/0525$ (2010.01)

(52) Cooperative Patent Classification (CPC):
Y02E 60/10

(86) International application number:
PCT/CN2024/112806

(87) International publication number:
WO 2025/055664 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023 CN 202311194596

(71) Applicant: Contemporary Amperex Technology
Co., Limited
Ningde, Fujian 352100 (CN)

(72) Inventors:
• ZHANG, Qiyu
Ningde, Fujian 352100 (CN)
• WANG, Jing
Ningde, Fujian 352100 (CN)
• WU, Qi
Ningde, Fujian 352100 (CN)
• CHEN, Qiang
Ningde, Fujian 352100 (CN)
• LIU, Na
Ningde, Fujian 352100 (CN)

(74) Representative: Kraus & Lederer PartGmbB
Thomas-Wimmer-Ring 15
80539 München (DE)

(54) **POSITIVE ELECTRODE ACTIVE MATERIAL AND PREPARATION METHOD THEREFOR, POSITIVE ELECTRODE PLATE, BATTERY, AND POWER CONSUMING DEVICE**

(57) A positive electrode active material and a preparation method therefor, a positive electrode plate, a battery, and a power consuming device. The positive electrode active material comprises: an inner core, which includes $Li_{a1}Ni_{x1}M_{y1}M'_{z1}O_{m1}R_{n1}$, wherein $0.9 \leq a1 \leq 1.1$, $0.6 \leq x1 < 1$, $0 \leq y1 \leq 0.4$, $0 < z1 \leq 0.01$, $1.9 \leq m1 \leq 2.2$, and $0 \leq n1 \leq 0.1$; M comprises at least one of Co, Mn, Al, Ta, Mg, Mo, Ga, Sn, Ge, Te, La and Ce; M' comprises at least one of Y, La, Mo, Zr, W, Sb, Nb, Te, Sr, Ti, or Ga; R comprises at least one of F, Cl, or S; an intermediate layer, which is coated on at least a part of the outer surface of the inner core and has a porous structure; and an outer shell layer, which is coated on at least a part of the outer surface of the intermediate layer and includes $Li_{a2}Ni_{x2-}M_{y2}M'_{z2}O_{m2}R_{n2}$, wherein $0.9 \leq a2 \leq 1.1$, $0.6 \leq x2 < 1$, $0 \leq y2 \leq 0.4$, $0 \leq z2 \leq 0.01$, $1.9 \leq m2 \leq 2.2$, and $0 \leq n2 \leq 0.1$.

FIG. 1

**Description**

TECHNICAL FIELD

The present application relates to the field of batteries, and in particular, to a positive electrode active material and a preparation method therefor, a positive electrode plate, a battery, and an electric device.

BACKGROUND

As energy storage devices, batteries are widely used in various fields. Taking lithium-ion batteries as an example, the lithium-ion batteries have the characteristics of eco-friendliness, high energy efficiency, low carbon emissions, and the like, and thus are not only applied to energy storage power systems such as hydropower, thermal power, wind power, and solar power stations, but also widely applied in electric transportation vehicles such as electric bicycles, electric motorcycles, electric cars, and ships, as well as in military equipment, aerospace, and other fields. With the development of the current society, the requirements for batteries have become increasingly stringent.

SUMMARY

In view of the technical problems in the prior art, the present application provides a positive electrode active material, aiming at improving the volume stability of the positive electrode active material in the charging and discharging process and improving the cycle performance of a battery.
In order to achieve the above object, a first aspect of the present application provides a positive electrode active material. The positive electrode active material includes:

a core, where the core includes $Li_{a1}Ni_{x1}M_{y1}M'_{z1}O_{m1}R_{n1}$, where $0.9 \leq a1 \leq 1.1$, $0.6 \leq x1 < 1$, $0 \leq y1 \leq 0.4$, $0 < z1 \leq 0.01$, $1.9 \leq m \leq 2.2$, and $0 \leq n1 \leq 0.1$; M includes at least one element of Co, Mn, Al, Ta, Mg, Mo, Ga, Sn, Ge, Te, La, and Ce; M' includes at least one element of Y, La, Mo, Zr, W, Sb, Nb, Te, Sr, Ti, or Ga; and R includes at least one element of F, Cl, or S;

an intermediate layer, where the intermediate layer wraps at least a part of an outer surface of the core and is provided with a porous structure; and

a shell layer, where the shell layer wraps at least a part of an outer surface of the intermediate layer and includes $Li_{a2}Ni_{x2}M_{y2}M'_{z2}O_{m2}R_{n2}$, where $0.9 \leq a2 \leq 1.1$, $0.6 \leq x2 < 1$, $0 \leq y2 \leq 0.4$, $0 \leq z2 \leq 0.01$, $1.9 \leq m2 \leq 2.2$, and $0 \leq n2 \leq 0.1$.

The positive electrode active material of the present application has the following beneficial effects: Since the high-nickel layered positive electrode active material is prone to large volumetric deformation in the charging and discharging process, posing a risk of internal cracking, and cracks may extend to a surface of particles of the positive electrode active material. Doping element M' in the positive electrode active material at the core is beneficial for improving the volume stability of the core of the positive electrode active material in the charging and discharging process, thereby reducing the risk of internal cracking of the particles of the positive electrode active material. Meanwhile, arranging the intermediate layer with the porous structure between the core and the shell layer is beneficial for buffering the volumetric deformation and the stress accumulation of the core, thereby inhibiting the internal cracking of the particles of the positive electrode active material and the extension of the cracks to the surface. Therefore, the cracking risk of the particles of the positive electrode active material in the charge-discharge cycle process can be reduced, thereby improving the volume stability and the cycle performance thereof.
In some examples of the present application, the intermediate layer includes: $M''_pO_q$, where $1 \leq p \leq 2$, $2 \leq q \leq 3$, and M'' includes at least one element of B, Al, or Si. Satisfying the given conditions is beneficial for reducing the risk that an intermediate layer material may have adverse effects on the electrochemical performance of the positive electrode active material in one aspect, and forming the intermediate layer with the porous structure in the positive electrode active material in combination with a formation method of $M''_pO_q$ in another aspect, thereby contributing to both the electrochemical performance and the cycling stability of the positive electrode active material.
In some examples of the present application, in the positive electrode active material, a ratio of a mole number of element M'' to a mole number of element Li is (0.005-0.02):(0.9-1.1). Controlling the relative amounts of the element M'' and the element Li to be in the given ranges further contributes to both the high specific capacity and the cycling stability of the positive electrode active material.
In some examples of the present application, in the positive electrode active material, a ratio of a mole number of element M'' to a mole number of element Li is (0.008-0.012):(0.9-1.1).

In some examples of the present application, z2 > 0. Enabling the shell layer to satisfy the given conditions is beneficial for further improving the cycling stability of the positive electrode active material.

In some examples of the present application, the core includes: $Li_{a1}Ni_{x1}Co_{y11}Mn_{y12}M'_{z1}O_{m1}R_{n1}$, where $0 \leq y11 \leq 0.2$, $0 \leq y12 \leq 0.2$, and y11 and y12 are not zero simultaneously; and/or, the shell layer includes: $Li_{a2}Ni_{x2}Co_{y21}Mn_{y22}M'_{z2}O_{m2}R_{n2}$, $0 \leq y21 \leq 0.2$, $0 \leq y22 \leq 0.2$, and y21 and y22 are not zero simultaneously. Satisfying the given conditions contributes to both the high specific capacity and the cycle performance of a lithium battery.

In some examples of the present application, $0.002 \leq z1 \leq 0.008$; and/or $0.002 \leq z2 \leq 0.008$. Controlling the values of z1 and z2 to satisfy the given range conditions is further beneficial for reducing the risk that doping M' may degrade the electrochemical performance of the positive electrode active material.

In some examples of the present application, a particle size of the particles of the positive electrode active material is $D_1$, a distance from an inner surface of the intermediate layer to a center of the core is greater than or equal to $0.3D_1$, and a distance from an outer surface of the intermediate layer to the center of the core is less than or equal to $0.4D_1$. Satisfying the given conditions is beneficial for mitigating the cracking risk of the positive electrode active material in the cycle process, and reducing the negative effects on the ion migration rate and the volumetric energy density, thereby further contributing to both the cycle performance, the rate capability, and the energy density of the positive electrode active material.

In some examples of the present application, the particle size of the particles of the positive electrode active material is $D_1$, and a thickness of the intermediate layer is $0.05D_1$-$0.0625D_1$. Satisfying the given conditions is beneficial for mitigating the cracking risk of the positive electrode active material in the cycle process, and reducing the negative effects on the ion migration rate and the volumetric energy density, thereby further contributing to both the cycle performance, the rate capability, and the energy density of the positive electrode active material.

In some examples of the present application, the volume particle size distribution of the positive electrode active material satisfies: $\frac{D_v90 - D_v10}{D_v50} \geq 1.1$ . Controlling the volume particle size distribution of the positive electrode active material to satisfy the given conditions is beneficial for obtaining a high compaction density and improving the volumetric energy density of the battery.

In some examples of the present application, the volume average particle size Dv50 of the positive electrode active material is 6 $\mu$m-18 $\mu$m. Satisfying the given conditions is beneficial for improving the stability of the integral structure of the particles of the positive electrode active material, and enabling the positive electrode active material to have the advantages of a small internal conduction distance and few surface side reactions, thereby facilitating further improvement in the electrochemical performance of the positive electrode active material.

A second aspect of the present application provides a method for preparing a positive electrode active material. The method includes:

mixing a core raw material including a nickel source, an M source, and an M' source to obtain a mixed solution, and performing a first precipitation reaction on the mixed solution to obtain first particles;

mixing a solution formed by using an intermediate layer raw material with the first particles, and performing a second precipitation reaction to obtain second particles;

mixing a shell layer raw material including a nickel source and an M source, mixing the obtained mixed solution with the second particles, and performing a third precipitation reaction to obtain precursor particles; and

mixing the precursor particles with a lithium source, and performing sintering to obtain the positive electrode active material,

where a precipitation product formed by the second precipitation reaction on an outer surface of the first particles is formed into a porous structure through sintering;

the positive electrode active material includes:

a core, where the core includes $Li_{a1}Ni_{x1}M_{y1}M'_{z1}O_{m1}R_{n1}$, where $0.9 \leq a1 \leq 1.1$, $0.6 \leq x1 < 1$, $0 \leq y1 \leq 0.4$, $0 < z1 \leq 0.01$, $1.9 \leq m1 \leq 2.2$, and $0 \leq n1 \leq 0.1$; M includes at least one element of Co, Mn, Al, Ta, Mg, Mo, Ga, Sn, Ge, Te, La, and Ce; M' includes at least one element of Y, La, Mo, Zr, W, Sb, Nb, Te, Sr, Ti, or Ga; and R includes at least one element of F, Cl, or S;

an intermediate layer, where the intermediate layer wraps at least a part of an outer surface of the core and is provided with a porous structure; and

a shell layer, where the shell layer wraps at least a part of an outer surface of the intermediate layer and includes $Li_{a2}Ni_{x2}M_{y2}M'_{z2}O_{m2}R_{n2}$, where $0.9 \leq a2 \leq 1.1$, $0.6 \leq x2 < 1$, $0 \leq y2 \leq 0.4$, $0 \leq z2 \leq 0.01$, $1.9 \leq m2 \leq 2.2$, and $0 \leq n2 \leq 0.1$.

The method for preparing the positive electrode active material in the present application has the following beneficial effects: The positive electrode active material with the core including $Li_{a1}Ni_{x1}M_{y1}M'_{z1}O_{m1}R_{n1}$, the shell layer including $Li_{a2}Ni_{x2}M_{y2}M'_{z2}O_{m2}R_{n2}$, and the intermediate layer being provided with the porous structure can be prepared, the operational feasibility is high, and it is easy to control the raw material composition of each layer and the structural parameters.

In some examples of the present application, the intermediate layer raw material includes an M" source, where M" includes a compound having at least one element of B, Al, or Si.

A third aspect of the present application provides a positive electrode plate. The positive electrode plate includes: the positive electrode active material in the first aspect of the present application or the positive electrode active material prepared by the preparation method in the second aspect of the present application.

A fourth aspect of the present application provides a battery. The battery includes: the positive electrode plate in the third aspect of the present application.

A fifth aspect of the present application provides an electric device. The electric device includes: the battery in the fourth aspect of the present application.

The additional aspects and the advantages of the present application will be partially provided in the following description, will partially become apparent from the following description, or will be learned through the practice of the present application.

BRIEF DESCRIPTION OF THE DRAWINGS

The above and/or additional aspects and advantages of the present application will become apparent and readily understood from the description of examples in conjunction with the drawings below, in which:

FIG. 1 is a schematic view of a cross section of secondary particles of a positive electrode active material according to an embodiment of the present application;

FIG. 2 is a scanning electron microscope view of a cross section of secondary particles of a positive electrode active material in an active substance layer of a positive electrode plate according to Example 1 of the present application;

FIG. 3 is a scanning electron microscope view of a cross section of secondary particles of a positive electrode active material in an active substance layer of a positive electrode plate according to Comparative Example 2 of the present application;

FIG. 4 is a schematic structural view of a battery according to an embodiment of the present application;

FIG. 5 is a schematic structural view of a battery module according to an embodiment of the present application;

FIG. 6 is a schematic structural view of a battery pack according to an embodiment of the present application;

FIG. 7 is an exploded view of the battery pack according to an embodiment of the present application; and

FIG. 8 is a schematic view of an embodiment of an electric device using a battery as a power source according to an embodiment of the present application.

Description of the reference numerals:
11: core; 12: intermediate layer; 13: shell layer; 1: battery; 2: battery module; 3: battery pack; 4: upper case body; 5: lower case body.

DETAILED DESCRIPTION

The present application will be further described below with reference to specific embodiments. It should be understood that these specific embodiments are merely used for describing the present application and are not intended to limit the scope of the present application.

Hereinafter, embodiments specifically disclosing a positive electrode active material and a preparation method therefor, a positive electrode plate, a battery, and an electric device of the present application are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with a lower limit and/or an upper limit. A given range is defined by selecting a lower limit and/or an upper limit that define/defines the boundaries of a particular range. Ranges defined in this manner may or may not include end values and may be arbitrarily combined, that is, any lower limit may be combined with any upper limit to form an unspecified range and any lower limit may be combined with any other lower limit to form an unspecified range, and likewise, any upper limit may be combined with any other upper limit to form an unspecified range. Further, each separately disclosed point or single value itself, as a lower limit or upper limit, may be combined with any other point or single value or with any other lower limit or upper limit to form an unspecified range. For example, if ranges of 60-120 and 80-110 are listed for a particular parameter, it will be appreciated that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, the method includes steps S1 and S2, which indicate that the method may include steps S1 and S2, which are performed in sequence, and may also include steps S2 and S1, which are performed in sequence. For example, the mentioned method may further include step S3, which indicates that step S3 may be added to the method in any order, for example, the method may include steps S1, S2, and S3, may also include steps S1, S3, and S2, may also include steps S3, S1, and S2, and so on.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, in the present application, the term "and/or" is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

In the present application, the terms "a plurality of" and "multiple" mean two or more.

Unless otherwise defined, all technical and scientific terms used in the present application have the same meaning as commonly understood by those skilled in the technical field to which the present application belongs. The terms used in the present application are only for illustrating the specific examples, rather than limiting the present application. The terms "include", "comprise" and "provided with", and any variations thereof in the specification and claims of the present application and the above description of the drawings are intended to encompass non-exclusive inclusions. Unless otherwise specified, the terms used in the present application have well-known meanings that are commonly understood by those skilled in the art. Unless otherwise specified, the values of the parameters mentioned in the present application can be measured by various measurement methods commonly used in the art (for example, they can be tested according to the methods given in the examples of the present application).

With the continuous progress of the theme of eco-friendliness, lithium-ion batteries have been applied to all aspects of life, including vehicles, electronic devices, energy storage devices, and the like. However, with the continuous popularization of battery applications, the requirements for batteries have become increasingly stringent. A high-nickel layered positive electrode active material generally undergoes severe volumetric deformation in the cyclic charging and discharging process, which can cause the internal stress of the material to be greatly accumulated; when the accumulation degree of the internal stress of the material is too high, the interior of the material may crack; and when cracks extend to the surface of the positive electrode active material, an electrolytic solution may penetrate the positive electrode active material in a large amount, thereby affecting the performance of the material. At present, porous structures are mainly adopted to alleviate the problem. However, in the existing positive electrode active material, the porous structures are usually uniformly distributed in secondary particles of the material, and a large amount of porous structures may aggravate the corrosion of the electrolytic solution to the interior of the material, thereby affecting the cycle performance of the material.

In the present application, by improving the structure of particles of the positive electrode active material, the positive electrode active material is sequentially provided with a multilayer structure of a core, an intermediate layer, and a shell layer from inside to outside, where the nickel-containing positive electrode active material at the core is doped with element M' (including at least one of Y, La, Mo, Zr, W, Sb, Nb, Te, Sr, Ti, or Ga), which can improve the volume stability of the positive electrode active material at the core in the charging and discharging process, and reduce the risk of internal cracking of the particles of the positive electrode active material. Meanwhile, the intermediate layer is formed into a porous structure, and thus can be configured to accommodate the volumetric deformation and the stress accumulation inside the particles of the positive electrode active material, so as to inhibit extension of cracks inside the particles of the positive electrode active material to the surface. Therefore, the volume stability of the particles of the positive electrode active material can be improved, and the cracking risk thereof in the charge-discharge cycle process can be reduced, thereby improving the cycle performance thereof.

The positive electrode active material disclosed in the examples of the present application is applicable to a secondary battery, and the battery disclosed in the examples of the present application may be used in an electric device using a battery as a power source or various energy storage systems using a battery as an energy storage element. The electric device may include, but is not limited to, a mobile phone, a tablet or laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

A first aspect of the present application provides a positive electrode active material. The positive electrode active material includes: a core, an intermediate layer, and a shell layer. The core includes $Li_{a1}Ni_{x1}M_{y1}M'_{z1}O_{m1}R_{n1}$, where $0.9 \leq a1 \leq 1.1$, $0.6 \leq x1 < 1$, $0 \leq y1 \leq 0.4$, $0 < z1 \leq 0.01$, $1.9 \leq m1 \leq 2.2$, and $0 \leq n1 \leq 0.1$; M includes at least one element of Co, Mn, Al, Ta, Mg, Mo, Ga, Sn, Ge, Te, La, and Ce; M' includes at least one element of Y, La, Mo, Zr, W, Sb, Nb, Te, Sr, Ti, or Ga; and R includes at least one element of F, Cl, or S. The intermediate layer wraps at least a part of an outer surface of the core and is provided with a porous structure. The shell layer wraps at least a part of an outer surface of the intermediate layer and includes $Li_{a2}Ni_{x2}M_{y2}M'_{z2}O_{m2}R_{n2}$, where $0.9 \leq a2 \leq 1.1$, $0.6 \leq x2 < 1$, $0 \leq y2 \leq 0.4$, $0 \leq z2 \leq 0.01$, $1.9 \leq m2 \leq 2.2$, and $0 \leq n2 \leq 0.1$.

For example, the values of a1 and a2 may each independently be 0.9, 0.95, 1, 1.05, 1.1, etc., or may be in a range formed by any of the above values; the values of x1 and x2 may each independently be 0.6, 0.65, 0.7, 0.75, 0.8, 0.85, 0.9, 0.95, etc., or may be in a range formed by any of the above values; the values of y1 and y2 may each independently be 0, 0.02, 0.05, 0.08, 0.1, 0.12, 0.15, 0.18, 0.2, 0.22, 0.25, 0.28, 0.3, 0.32, 0.35, 0.38, 0.4, etc., or may be in a range formed by any of the above values; the values of z1 and z2 may each independently be 0, 0.001, 0.002, 0.003, 0.004, 0.005, 0.006, 0.007, 0.008, 0.009, 0.01, etc., or may be in a range formed by any of the above values; the values of m1 and m2 may each independently be 1.9, 1.92, 1.95, 1.98, 2, 2.02, 2.05, 2.08, 2.1, 2.12, 2.15, 2.18, 2.2, etc., or may be in a range formed by any of the above values; the values of n1 and n2 may each independently be 0, 0.01, 0.02, 0.03, 0.04, 0.05, 0.06, 0.07, 0.08, 0.09, 0.1, etc., or may be in a range formed by any of the above values. Optionally, $x1 + y1 + z1 = 1$; and/or, $x2 + y2 + z2 = 1$. The values of x1, x2, y1, y2, z1, and z2 meet the requirements of the given ranges, helping obtain high specific capacity and obtain good cycle performance.

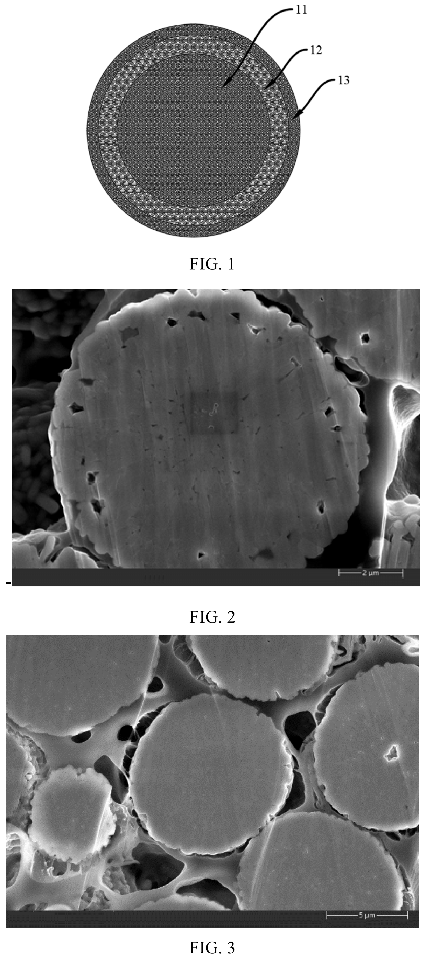

As will be understood with reference to FIG. 1, the positive electrode active material includes a core 11, an intermediate layer 12, and a shell layer 13. The core 11 includes $Li_{a1}Ni_{x1}M_{y1}M'_{z1}O_{m1}R_{n1}$, where $z1 > 0$. The intermediate layer 12 wraps at least a part of an outer surface of the core 11. The shell layer 13 wraps at least a part of an outer surface of the intermediate layer 12 and includes $Li_{a2}Ni_{x2}M_{y2}M'_{z2}O_{m2}R_{n2}$, where $z2 \geq 0$, i.e., the nickel-containing positive electrode active material at the shell layer may or may not be doped with element M'. The intermediate layer 12 is of a porous structure. Doping the element M' in the nickel-containing positive electrode active material at the core 11 is beneficial for improving the volume stability of the core of the positive electrode active material in the charging and discharging process, and reducing the risk of internal cracking of the particles of the positive electrode active material. The doped element M' usually does not participate in an electrochemical reaction in the charge-discharge cycle process, such that an unstable oxygen structure skeleton caused by the valence change of element Ni in the charging and discharging process can be bound by means of the strong bonding action of M'-O, thereby improving the stability of an internal layered structure of the material, reducing the risk of an irreversible phase change of the positive electrode active material in the cycle process, and inhibiting the collapse of the porous structure of the positive electrode active material at the later stage of a cycle. Meanwhile, by arranging the intermediate layer 12 with the porous structure between the core 11 and the shell layer 13, the intermediate layer is enabled to obtain high porosity, helping buffer the volumetric deformation and the stress accumulation of the core, and inhibit the internal cracking of the particles of the positive electrode active material and the extension of cracks to the surface, thereby inhibiting the cracking of the positive electrode active material in the cycle process without causing excessive electrolytic solution penetration, and improving the cycle performance of the positive electrode active material.It can be understood that in the present application, the porous structure of the intermediate layer 12 is defined relative to the core 11 and the shell layer 13. In terms of porosity, the porosity of the intermediate layer 12 is generally higher than that of the core 11 and that of the shell layer 13. For example, as a specific example, FIG. 2 shows a sectional view of secondary particles of a positive electrode active material observed under a scanning electron microscope after a positive electrode plate made of a positive electrode active material according to an embodiment of the present application is subjected to ion beam sputtering cutting. As is apparent from the figure, the intermediate layer 12 has a distinct porous structure compared with the core 11 and the shell layer 13.

In the actual operation process, the cross section of the positive electrode active material may be obtained by cutting the positive electrode active material (for example, a single positive electrode active material may be cut by using an ion beam sputtering method and the like, or a positive electrode plate is first prepared by using the positive electrode active material and then the positive electrode plate is cut), and the microstructure of the cross section of the positive electrode active material is characterized in combination with a scanning electron microscope (which may include, but is not limited to, a field emission scanning electron microscope (FESEM) and the like) and/or a transmission electron microscope (which may include, but is not limited to, a high-resolution transmission electron microscope (HRTEM) and the like), so as to characterize the porous structure of the intermediate layer. In addition, the crystal structure of the positive electrode active material may be tested in combination with X-ray diffraction (XRD), and the types and content of micro-region composition elements in a cross-sectional region of the positive electrode active material may be analyzed in combination with an energy dispersive spectrometer (EDS) and/or inductively coupled plasma (ICP)-based elemental analysis, such that the composition and the proportion of elements of the core and the shell layer can be determined. It should be noted that the manner of cutting the positive electrode active material is not particularly limited, and may be flexibly selected by those skilled in the art according to actual needs.

The positive electrode active material of the present application has the following beneficial effects: Doping the element M' in the positive electrode active material at the core is beneficial for improving the volume stability of the core of the positive electrode active material in the charging and discharging process, thereby reducing the risk of internal cracking of the particles of the positive electrode active material. Meanwhile, arranging the loose and porous intermediate layer between the core and the shell layer is beneficial for buffering the volumetric deformation and the stress accumulation of the core, thereby inhibiting the internal cracking of the particles of the positive electrode active material and the extension of the cracks to the surface. Therefore, the cracking risk of the particles of the positive electrode active material in the charge-discharge cycle process can be reduced, thereby improving the volume stability and the cycle performance thereof.

It should be noted that, in $Li_{a1}Ni_{x1}M_{y1}M'_{z1}O_{m1}R_{n1}$, M, M', and R may each independently include one or more elements. Unless otherwise specified, when one or more of M, M', and R includes two or more elements, the limitation on the numerical range of the corresponding stoichiometric number in the chemical formula is not only a limitation on the stoichiometric number of each element as the site, but also a limitation on the sum of the stoichiometric numbers of all elements as the site. For example, taking M' as an example, when M' includes two or more of elements $M'_1$, $M'_2$ ... $M'_n$, the respective stoichiometric numbers $z1_1$, $z1_2$ ... $z1_n$ of $M'_1$, $M'_2$ ... $M'_n$ each need to fall within the numerical range defined for z1 by the present application, and the sum of $z1_1$, $z1_2$ ... $z1_n$ also needs to fall within the numerical range. Similarly, in the case where M and R include two or more elements, the limitation on the numerical range of the stoichiometric numbers of M and R in the present application also has the above meaning. Similarly, in $Li_{a2}Ni_{x2}M_{y2}M'_{z2}O_{m2}R_{n2}$, M, M', and R may also each independently include one or more elements, and in the case where M, M', and R include two or more elements, the limitation on the numerical range of the stoichiometric numbers of M, M', and R also has the above meaning.

In addition, the core may include, but is not limited to, $Li_{a1}Ni_{x1}M_{y1}M'_{z1}O_{m1}R_{n1}$, and the shell layer may include, but is not limited to, $Li_{a2}Ni_{x2}M_{y2}M'_{z2}O_{m2}R_{n2}$. For example, taking the core as an example, the core may include only $Li_{a1}Ni_{x1}M_{y1}M'_{z1}O_{m1}R_{n1}$, or may include both $Li_{a1}Ni_{x1}M_{y1}M'_{z1}O_{m1}R_{n1}$ and other types of positive electrode active materials, where the specific type of other types of positive electrode active materials is not particularly limited, and may be flexibly selected by those skilled in the art according to actual needs, which is not described in detail herein. In addition, $Li_{a1}Ni_{x1}M_{y1}M'_{z1}O_{m1}R_{n1}$ may include one or more of all positive electrode active materials satisfying the general formula, and $Li_{a2}Ni_{x2}M_{y2}M'_{z2}O_{m2}R_{n2}$ may also include one or more of all positive electrode active materials satisfying the general formula. In addition, the compositions of the core and the shell layer may be the same or different, optionally the compositions of the core and the shell layer are the same. Still optionally, the core may include only $Li_{a1}Ni_{x1-}M_{y1}M'_{z1}O_{m1}R_{n1}$, and the shell layer may include only $Li_{a2}Ni_{x2}M_{y2}M'_{z2}O_{m2}R_{n2}$.

It should be noted that, in a positive electrode plate, a battery or an electric device, since lithium ions may be consumed since the battery undergoes the processes of formation, cycling, and the like, the measured content a1 and/or a2 of the element lithium in the positive electrode active material may be less than 1; in addition, if the positive electrode plate and a negative electrode plate adopt a lithium supplement agent, the measured content a1 and/or a2 of the element lithium in the positive electrode active material may be greater than 1 after the battery undergoes the processes of formation, cycling, and the like. In addition, as lithium undergoes deintercalation and consumption in the charging and discharging process of the battery, the molar content of lithium varies when the battery is discharged to different states. In the listing of the positive electrode active material in the present application, the molar content of lithium is in an initial state of the material, that is, a state before the material is added, and when the positive electrode active material is applied to a battery system, the molar content of lithium may change after the charge-discharge cycle. In addition, in the preparation process of the positive electrode active material, due to the different process controls of the oxygen content or factors such as oxygen release from the crystal lattice, the content of element oxygen in the positive electrode active material may be different, the molar content of oxygen is only a theoretical value in the listing of the positive electrode active material in the present application, and the actual molar content of oxygen may fluctuate.

Further, when the positive electrode active material in the first aspect of the present application satisfies the above conditions, the composition of the intermediate layer and the shell layer, the type of the positive electrode active material, the relative positional relationship between the layers, the volume particle size distribution relationship, and the like may be further controlled to further optimize the performance of the positive electrode active material. That is, on the basis of satisfying the above conditions, one or more of the following conditions may also be optionally satisfied.

In some examples of the present application, the intermediate layer 12 may include: $M''_pO_q$, where $1 \leq p \leq 2$, $2 \leq q \leq 3$, and M'' may include at least one element of B, Al, or Si.

For example, the value of p may be 1, 1.1, 1.2, 1.3, 1.4, 1.5, 1.6, 1.7, 1.8, 1.9, 2, etc., or may be in a range formed by any of the above values. The value of q may be 2, 2.1, 2.2, 2.3, 2.4, 2.5, 2.6, 2.7, 2.8, 2.9, 3, etc., or may be in a range formed by any of the above values. For another example, the intermediate layer may include one or more of $Al_2O_3$, $B_2O_3$, and $SiO_2$. Using $M''_pO_q$ as an intermediate layer material is beneficial for reducing the risk that the intermediate layer material may have adverse effects on the electrochemical performance of the positive electrode active material. Besides, in the actual preparation process, the given element M'' or a compound of the given element M'' may also be used to form a unique cross-linked structure (such as gel) in an alkaline environment, a loose and porous skeleton structure may be obtained after sintering, thereby facilitating high porosity of the intermediate layer and enabling the intermediate layer to obtain certain supporting strength. For example, a mixed solution may be obtained by mixing the core raw material including a nickel source, an M source, and an M' source, and the mixed solution is subjected to a coprecipitation reaction to obtain first particles; a solution formed using an intermediate layer raw material (such as an aluminum source, a silicon source, and a boron source) is mixed with the first particles, and a precipitation reaction is performed to obtain second particles, at the moment, the intermediate layer raw material may include M'' and/or a compound of M'', the precipitation reaction may be performed in an alkaline environment, and a precipitation product having the element M'' in the precipitation process may form a unique cross-linked structure layer on the surface of the first particles; a solution formed using a shell layer raw material (optionally, the shell layer raw material may have the same composition as the core raw material) including a nickel source and an M source is mixed with the second particles, and a precipitation reaction is performed to obtain precursor particles; the precursor particles are mixed with a lithium source, and sintering is performed to obtain the positive electrode active material. By cutting the positive electrode active material, an intermediate layer region in the cross section of the positive electrode active material is determined by using a scanning electron microscope and/or a transmission electron microscope, and the types of micro-region composition elements in the cross-sectional region of the positive electrode active material are tested in combination with XRD and/or analyzed in combination with an EDS, so as to determine whether or not the intermediate layer contains $M''_pO_q$. Optionally, M'' includes Al.

Enabling the intermediate layer to satisfy the given conditions is beneficial for reducing the risk that the intermediate layer material may have adverse effects on the electrochemical performance of the positive electrode active material in one aspect, and forming the intermediate layer with the porous structure in the positive electrode active material in combination with a formation method of $M''_pO_q$ in another aspect, thereby contributing to both the electrochemical performance and the cycling stability of the positive electrode active material.

In some examples of the present application, in the positive electrode active material, a ratio of a mole number of element M'' to a mole number of element Li is (0.005-0.02):(0.9-1.1), optionally (0.008-0.012):(0.9-1.1).

For example, in the positive electrode active material, the ratio of the mole number of the element M'' to the mole number of the element Li may be 0.005/1.1, 0.005/1.05, 0.005/1, 0.005/0.95, 0.005/0.9, 0.008/1.1, 0.008/1.05, 0.008/1, 0.008/0.95, 0.008/0.9, 0.01/1.1, 0.01/1.05, 0.01/1, 0.01/0.95, 0.01/0.9, 0.012/1.1, 0.012/1.05, 0.012/1, 0.012/0.95, 0.012/0.9, 0.015/1.1, 0.015/1.05, 0.015/1, 0.015/0.95, 0.015/0.9, 0.02/1.1, 0.02/1.05, 0.02/1, 0.02/0.95, 0.02/0.9 etc., and may be in a range formed by any of the above values. Optionally, the types of elements M'' and M' are different. An ICP-based elemental analysis may be used to determine the content of the elements M'' and Li in the positive electrode active material, and then a ratio of total mole numbers of the two is obtained. The content of $M''_pO_q$ in the intermediate layer can be indirectly explained by the content of the element M''. Increasing the content of the element M'' helps increase the thickness of the intermediate layer, and allows the content of the element M'' to satisfy the given conditions. This helps enable the intermediate layer to have an appropriate thickness, thereby improving the buffering capacity of the intermediate layer for the volume expansion and the stress accumulation of the core, and reducing the cracking risk of the particles of the positive electrode active material. Meanwhile, this also helps reduce the effects on the volumetric energy density of the positive electrode active material and further contributes to both the high specific capacity and the cycling stability of the positive electrode active material. Optionally, in the positive electrode active material, the ratio of the mole number of the element M" to the mole number of Li may be (0.008-0.012):(0.9-1.1), and satisfying the conditions is beneficial for further reducing the possible negative effects on the volumetric energy density of the positive electrode active material.

Controlling the relative amounts of the element M" and the element Li to be in the given ranges further contributes to both the high specific capacity and the cycling stability of the positive electrode active material.

In some examples of the present application, $z2 > 0$.

In the positive electrode active material, by doping the element M' also in the positive electrode active material of the shell layer, the cycling stability of the shell layer can be further improved, which is not only beneficial for reducing the cracking risk of the shell layer itself, but also further beneficial for inhibiting the extension of cracks inside the particles of the positive electrode active material to the surface, thereby improving the volume stability and the cycle performance thereof. The types and the content of the micro-region composition elements in the shell layer may be determined by using an EDS energy spectrum analysis, and/or the crystal structure of the positive electrode active material may be tested in combination with XRD. Optionally, the intermediate layer may include or not include element M'.

Enabling the shell layer to satisfy the given conditions is beneficial for further improving the cycling stability of the positive electrode active material.

In some examples of the present application, the core 11 may include: $Li_{a1}Ni_{x1}Co_{y11}Mn_{y12}M'_{z1}O_{m1}R_{n1}$, where $0 \leq y11 \leq 0.2$, $0 \leq y12 \leq 0.2$, and y11 and y12 are not zero simultaneously; and/or, the shell layer 13 may include: $Li_{a2}Ni_{x2}Co_{y21}Mn_{y22}M'_{z2}O_{m2}R_{n2}$, $0 \leq y21 \leq 0.2$, $0 \leq y22 \leq 0.2$, and y21 and y22 are not zero simultaneously.

It can be understood that the core may be either a single material or a mixture including a plurality of positive electrode active materials satisfying the general formula $Li_{a1}Ni_{x1}M_{y1}M'_{z1}O_{m1}R_{n1}$. Similarly, the shell layer may be either a single material or a mixture including a plurality of positive electrode active materials satisfying the general formula $Li_{a2}Ni_{x2}M_{y2}M'_{z2}O_{m2}R_{n2}$. For example, taking the core as an example, the core may include, but is not limited to, one or more of $Li_{a1}Ni_{x1}Co_{y11}Mn_{y12}M'_{z1}O_{m1}R_{n1}$, $Li_{a1}Ni_{x1}Co_{y11}M'_{z1}O_{m1}R_{n1}$, $Li_{a1}Ni_{x1}Mn_{y12}M'_{z1}O_{m1}R_{n1}$, and the like. As a specific example, the core may include $Li_{a1}Ni_{x1}Co_{y11}Mn_{y12}M'_{z1}O_{m1}R_{n1}$. As another specific example, the shell layer may include: $Li_{a2}Ni_{x2}Co_{y21}Mn_{y22}M'_{z2}O_{m2}R_{n2}$. $Li_{a1}Ni_{x1}Co_{y11}Mn_{y12}M'_{z1}O_{m1}R_{n1}$ may be either a single material, or a mixture including a plurality of positive electrode active materials satisfying the general formula; $Li_{a2}Ni_{x2}Co_{y21}Mn_{y22}M'_{z2}O_{m2}R_{n2}$ may be either a single material or a mixture including a plurality of positive electrode active materials satisfying the general formula.

The values of y11 and y12 may each independently be 0, 0.02, 0.05, 0.08, 0.1, 0.12, 0.15, 0.18, 0.2, etc., or may be in a range formed by any of the above values; the values of y21 and y22 may each independently be 0, 0.02, 0.05, 0.08, 0.1, 0.12, 0.15, 0.18, 0.2, etc., or may be in a range formed by any of the above values. Doping Co in the Ni-containing layered positive electrode active material is beneficial for stabilizing the layered structure, inhibiting lithium-nickel mixed arrangement, and improving the cycle performance of the positive electrode active material; doping manganese is beneficial for improving the structural stability and the thermal stability; the values of x1, x2, y11, y12, y21 and y22 being in the given ranges is beneficial for obtaining high specific capacity, good cycle performance, and good coulombic efficiency. The crystal structure of the positive electrode active material may be tested in combination with XRD, and by cutting the positive electrode active material, the types and the content of micro-region composition elements in the cross-sectional region of the positive electrode active material are analyzed in combination with the EDS energy spectrum analysis and/or the ICP-based elemental analysis.

Enabling the compositions of the core and/or the shell layer to satisfy the given range conditions contributes to both the high specific capacity and the cycle performance of the lithium battery.

In some examples of the present application, $0.002 \leq z1 \leq 0.008$; and/or $0.002 \leq z2 \leq 0.008$.

For example, z1 and z2 may each independently be 0, 0.001, 0.002, 0.003, 0.004, 0.005, 0.006, 0.007, 0.008, 0.009, 0.01, etc., or may be in a range formed by any of the above values. As described above, the values of z1 and z2 may be measured in combination with the ICP-based elemental analysis and/or the EDS analysis, for example, when the compositions of the materials in the core and the shell layer are the same, the values of z1 and z2 are the same, and the values of z1 and z2 may be obtained by directly performing the ICP-based elemental analysis on the particles of the positive electrode active material. As the values of z1 and z2 increase, the doping amount of M' in the positive electrode active material at the core and the shell layer is also increased, helping further improve the volume stability of the positive electrode active material in the cycle process, thereby reducing the cracking risk. In addition, controlling the values of z1 and z2 to each independently be in the given ranges is further beneficial for reducing the risk of significantly increasing the impurity phase due to excessive doping of M', thereby affecting the electrochemical performance of the positive electrode active material.

Controlling the values/value of z1 and/or z2 to satisfy the given range conditions is beneficial for improving the cycling stability of the positive electrode active material, and reducing the risk of degradation of the electrochemical performance of the positive electrode active material.

In some examples of the present application, a particle size of the particles of the positive electrode active material is $D_1$, a distance from an inner surface of the intermediate layer 12 to a center of the core 11 is greater than or equal to $0.3D_1$, and a distance from an outer surface of the intermediate layer 12 to the center of the core 11 is less than or equal to $0.4D_1$.

For example, the distance from the inner surface of the intermediate layer to the center of the core may be $0.3D_1$, $0.305D_1$, $0.31D_1$, $0.315D_1$, $0.32D_1$, $0.325$, $0.33D_1$, $0.335D_1$, $0.34D_1$, $0.345D_1$, $0.35D_1$, $0.355D_1$, $0.36D_1$, $0.37D_1$, $0.375D_1$, $0.38D_1$, $0.385D_1$, $0.39D_1$, $0.395D_1$, etc., or may be in a range formed by any of the above values. The distance from the outer surface of the intermediate layer to the center of the core may be $0.4D_1$, $0.395D_1$, $0.39D_1$, $0.385D_1$, $0.38D_1$, $0.375D_1$, $0.37D_1$, $0.365D_1$, $0.36D_1$, $0.355D_1$, $0.35D_1$, $0.345D_1$, $0.34D_1$, $0.335D_1$, $0.33D_1$, $0.325$, $0.32D_1$, $0.315D_1$, $0.31D_1$, $0.305D_1$, etc., or may be in a range formed by any of the above values. It can be understood that the distance from the outer surface of the intermediate layer to the center of the core is greater than the distance from the inner surface of the intermediate layer to the center of the core, the distance from the outer surface of the intermediate layer to the center of the core and the distance from the inner surface of the intermediate layer to the center of the core may both be understood as average distances, the distance from the inner surface of the intermediate layer to the center of the core may be understood as the particle size of the core, and the distance from the outer surface of the intermediate layer to the center of the core and the distance from the inner surface of the intermediate layer to the center of the core may be understood as the thickness of the intermediate layer. The particle size of the particles of the positive electrode active material may be understood as the absolute particle size of a single positive electrode active material particle or the volume distribution particle size $D_v50$ of the particles of the positive electrode active material, where $D_v50$ refers to a corresponding particle size when the cumulative volume distribution percentage reaches 50% (i.e., the volume content of the particles with the particle size less than or equal to the particle size and the volume content of the particles with the particle size greater than or equal to the particle size each account for 50% of the volume of total particles), and may be determined by using a laser particle size analyzer (Malvern Master Size 2000) with reference to the standard GB/T 19077-2016/ISO 13320:2009, and the particle size of the core also has the above meaning. The specific test process may include: adding a proper amount of a sample to be tested (ensuring a sample concentration that provides 8%-12% obscuration) to 20 ml of deionized water, ultrasonicating the mixture (53 KHz/120 W) for 5 min at the same time to ensure complete dispersion of the sample, and then determining the sample according to the GB/T 19077-2016/ISO 13320:2009 standard. The distance from the intermediate layer to the center of the core may be obtained by cutting the positive electrode active material and performing estimation in combination with a scanning electron microscope or a transmission electron microscope. Controlling the distances from the inner surface and the outer surface of the intermediate layer to the center of the core to satisfy the given conditions is beneficial for inhibiting the internal cracking of the positive electrode active material and the extension of cracks to the outer surface by using the high-porosity structure of the intermediate layer in one aspect, and improving the buffering capacity of the intermediate layer for the volumetric deformation and the stress accumulation of the core, and improving the inhibiting effect of the intermediate layer on the cracking of the positive electrode active material in another aspect. Meanwhile, it is also beneficial for reducing the risk of the intermediate layer cracks being easy to extend quickly to the outer surface due to the intermediate layer being too proximal to the shell layer, or the risk of the shell layer porosity being too large due to the intermediate layer directly extending to the shell layer, thereby causing a large amount of electrolytic solution to penetrate the material and affect the material performance. In addition, the risk of affecting the ion migration rate and the volumetric energy density of the positive electrode active material due to excessive thickness of the intermediate layer can be reduced.

Controlling the distance from the intermediate layer of the positive electrode active material to the center of the core to satisfy the given conditions is beneficial for mitigating the cracking risk of the positive electrode active material in the cycle process, and reducing the negative effects on the ion migration rate and the volumetric energy density, thereby further contributing to both the cycle performance, the rate capability, and the energy density of the positive electrode active material.

In some examples of the present application, a particle size of particles of the positive electrode active material is $D_1$, and a thickness of the intermediate layer 12 may be $0.05D_1$-$0.0625D_1$.

For example, the thickness of the intermediate layer 12 may be $0.05D_1$, $0.0525D_1$, $0.055D_1$, $0.0575D_1$, $0.06D_1$, $0.0625D_1$, etc., or may be in a range formed by any of the above values. The thickness of the intermediate layer may be obtained by cutting the positive electrode active material and performing estimation in combination with a scanning electron microscope or a transmission electron microscope. In the present application, the thickness of the intermediate layer may be understood as the average thickness of the intermediate layer of the particles of the positive electrode active material. Controlling the thickness of the intermediate layer to satisfy the given conditions can enable the intermediate layer to have effective buffering capacity for the volumetric deformation and the stress accumulation of the core, which is beneficial for inhibiting cracking of the positive electrode active material and outward extension of cracks, and can further reduce the negative effects on the thickness of the intermediate layer on the ion migration rate and the volumetric energy density of the positive electrode active material.

Controlling the thickness of the intermediate layer to satisfy the given conditions is beneficial for mitigating the cracking risk of the positive electrode active material in the cycle process, and further reducing the negative effects on the ion migration rate and the volumetric energy density, thereby further contributing to both the cycle performance, the rate capability, and the energy density of the positive electrode active material.

In some examples of the present application, in a cutting plane of the positive electrode active material passing through the center of the core thereof, the particle size of the cross section is 0.9-1.1 times of the volume average particle size Dv50 of the positive electrode active material, and the cross-sectional area of the intermediate layer 12 may be 5%-20% of the total cross-sectional area of the positive electrode active material. For example, the cross-sectional area of the intermediate layer 12 may be 5%, 8%, 10%, 12%, 15%, 18%, 20%, or the like of the total cross-sectional area of the positive electrode active material, or may be in a range formed by any of the above values. Controlling the cross-sectional area of the intermediate layer to satisfy the given conditions is also beneficial for mitigating the cracking risk of the positive electrode active material in the cycle process, and reducing the negative effects on the ion migration rate and the volumetric energy density, thereby further contributing to both the cycle performance, the rate capability, and the energy density of the positive electrode active material.

In some examples of the present application, the volume particle size distribution of the positive electrode active material satisfies: $\dfrac{D_v90 - D_v10}{D_v50} \geq 1.1$ .

For example, the value of $\dfrac{D_v90 - D_v10}{D_v50}$ may be any value greater than or equal to 1.1, such as 1.1, 1.2, 1.3, 1.5, 1.8, 2, 2.2, 2.5, 3, 3.5, and 4, or may be in a range formed by any of the above values. Optionally, the value of $\dfrac{D_v90 - D_v10}{D_v50}$ may be greater than or equal to 1.2. The volume particle sizes Dv90 and Dv10 of the positive electrode active material may also be determined by using a laser particle size analyzer (Malvern Master Size 2000) with reference to the standard GB/T 19077-2016/ISO 13320:2009. Dv10 indicates a corresponding particle size when a cumulative volume distribution percentage reaches 10%, i.e., the volume content of particles with the particle size less than or equal to the particle size is 10% of the volume of the total particles; Dv90 indicates a corresponding particle size when the cumulative volume distribution percentage reaches 90%, i.e., the volume content of particles with the particle size less than or equal to the particle size is 90% of the volume of the total particles. The particles of the positive electrode active material with the volume particle size distribution satisfying the given conditions have a wide particle size distribution, which is beneficial to obtaining high compaction density and improving the volumetric energy density of the battery. Optionally, $\dfrac{D_v90 - D_v10}{D_v50} \geq 1.2$ , and satisfying the given conditions is beneficial for further improving the $D_v50$ volumetric energy density of the battery.

Controlling the volume particle size distribution of the positive electrode active material to satisfy the given conditions is beneficial for improving the volumetric energy density of the battery.

In some examples of the present application, the volume average particle size Dv50 of the positive electrode active material may be 6 μm-18 μm.

For example, the volume average particle size Dv50 of the positive electrode active material may be 6 μm, 8 μm, 10 μm, 12 μm, 14 μm, 16 μm, 18 μm, or the like, or may be in a range formed by any of the above values, and optionally may be 8 μm-12 μm. Enabling the volume average particle size Dv50 of the positive electrode active material to satisfy the given conditions is beneficial for improving the stability of the integral structure of the particles of the positive electrode active material, and enabling the positive electrode active material to have the advantages of a small internal conduction distance and few surface side reactions, thereby facilitating further improvement in the electrochemical performance of the positive electrode active material.

In some examples of the present application, the compaction density of the positive electrode active material at a pressure of 5 tons may be greater than or equal to 3.4 g/cm$^3$. For example, the compaction density of the positive electrode active material at the pressure of 5 tons may be 3.4 g/cm$^3$, 3.45 g/cm$^3$, 3.5 g/cm$^3$, 3.55 g/cm$^3$, 3.6 g/cm$^3$, 3.65 g/cm$^3$, 3.7 g/cm$^3$, 3.75 g/cm$^3$, 3.8 g/cm$^3$, 3.85 g/cm$^3$, etc., or may be in a range formed by any of the above values. The compaction density of the positive electrode active material may be tested with reference to the national standard GB/T 24533-2009. Controlling the compaction density of the positive electrode active material to satisfy the given condition is beneficial for further improving the volumetric energy density of the battery.

At present, a scheme for preparing a positive electrode active material with a porous structure by embedding an organic template in a precursor and performing high-temperature sintering is provided. However, due to the dispersibility of the organic substance, and the fact that the position and the distribution condition of the porous structure are difficult to regulate, and that the precursor needs to be prepared by a hydrothermal method, the process is complicated and expensive, making it difficult to carry out large-scale industrial production.

In view of this, based on the same inventive concept as the positive electrode active material in the first aspect of the present application, a second aspect of the present application provides a method for preparing a positive electrode active material. The method includes:

mixing a core raw material including a nickel source, an M source, and an M' source to obtain a mixed solution, and performing a first precipitation reaction on the obtained mixed solution to obtain first particles; mixing a solution formed using an intermediate layer raw material with the first particles, and performing a second precipitation reaction to obtain second particles; mixing a shell layer raw material including a nickel source and an M source, mixing the obtained mixed solution with the second particles, and performing a third precipitation reaction to obtain precursor particles; and mixing the precursor particles with a lithium source, and performing sintering to obtain the positive electrode active material, where a precipitation product formed by the second precipitation reaction on an outer surface of the first particles is formed into a porous structure through sintering; the positive electrode active material includes: a core, an intermediate layer, and a shell layer, where the core includes $Li_{a1}Ni_{x1}M_{y1}M'_{z1}O_{m1}R_{n1}$, where $0.9 \leq a1 \leq 1.1$, $0.6 \leq x1 < 1$, $0 \leq y1 \leq 0.4$, $0 < z1 \leq 0.01$, $1.9 \leq m1 \leq 2.2$, and $0 \leq n1 \leq 0.1$; M includes at least one element of Co, Mn, Al, Ta, Mg, Mo, Ga, Sn, Ge, Te, La, and Ce; M' includes at least one element of Y, La, Mo, Zr, W, Sb, Nb, Te, Sr, Ti, or Ga; and R includes at least one element of F, Cl, or S; the intermediate layer wraps at least a part of an outer surface of the core and is provided with the porous structure; the shell layer wraps at least a part of an outer surface of the intermediate layer and includes $Li_{a2}Ni_{x2}M_{y2}M'_{z2}O_{m2}R_{n2}$, where $0.9 \leq a2 \leq 1.1$, $0.6 \leq x2 < 1$, $0 \leq y2 \leq 0.4$, $0 \leq z2 \leq 0.01$, $1.9 \leq m2 \leq 2.2$, and $0 \leq n2 \leq 0.1$.

The method for preparing the positive electrode active material in the present application has the following beneficial effects: The positive electrode active material with the core including $Li_{a1}Ni_{x1}M_{y1}M'_{z1}O_{m1}R_{n1}$, the shell layer including $Li_{a2}Ni_{x2}M_{y2}M'_{z2}O_{m2}R_{n2}$, and the intermediate layer being provided with the porous structure may be prepared, the operational feasibility is high, and it is easy to control the raw material composition of each layer and the structural parameters, such as the position, thickness, and pore structure, of the intermediate layer. It should be noted that the preparation method in the second aspect of the present application and the positive electrode active material in the first aspect of the present application are proposed based on the same inventive concept, and the features and effects described for the positive electrode active material in the first aspect of the present application are also applicable to the preparation method in the second aspect of the present application, and will be not be described in detail herein.

In some examples of the present application, when the first particles are prepared, based on the stoichiometric ratio of $Li_{a1}Ni_{x1}M_{y1}M'_{z1}O_{m1}R_{n1}$, the core raw material including the nickel source, the M source, and the M' source may be mixed to obtain a mixed solution; when the precursor particles are prepared, based on the stoichiometric ratio of the $Li_{a2}Ni_{x2}M_{y2}M'_{z2}O_{m2}R_{n2}$, the shell layer raw material including the nickel source and the M source is mixed to obtain a mixed solution; as still some specific examples, $x1 + y1 + z1 = 1$; and/or, $x2 + y2 + z2 = 1$.

In some examples of the present application, the intermediate layer raw material may include an M" source, where M" may include a compound having at least one element of B, Al, or Si. Optionally, the compound of M" may include an oxide and/or a salt.

In some examples of the present application, the shell layer raw material and the core raw material may be the same or different. For example, the types and proportions of the shell layer raw material and the core raw material may be completely the same; for another example, the shell layer raw material may differ from the core raw material only in that the shell layer raw material does not contain the M' source.

In some examples of the present application, the first precipitation reaction and the third precipitation reaction are coprecipitation reactions, and the second precipitation reaction may optionally be a gelation precipitation reaction. Whether a precipitant and/or a complexing agent are/is added may be selected independently for each of the first precipitation reaction, the second precipitation reaction, and the third precipitation reaction.

In some examples of the present application, taking a nickel-cobalt-manganese layered positive electrode active material applied to a lithium battery as an example, a nickel source, a manganese source, a cobalt source, and an M' source may be mixed according to a preset stoichiometric ratio to obtain a mixed solution; a part of the mixed solution is subjected to a coprecipitation reaction to prepare first particles; when the first particles grow to have a first preset particle size, the first particles are mixed with a solution formed using an M" source, and a precipitation reaction is performed to prepare second particles, where the solution formed using the M" source may be obtained by mixing an oxide of element M" with an acidic or basic solution, or may be obtained by dissolving an M" salt in a water-containing solvent; when the second particles grow to have a second preset particle size, the second particles are mixed with the remaining mixed solution and a coprecipitation reaction is performed to prepare precursor particles; when the precursor particles grow to have a third preset particle size, the precursor particles are mixed with a lithium salt according to a preset proportion, and sintering is performed to obtain the positive electrode active material. Optionally, whether a precipitant and/or a complexing agent are/is added may be selected independently for each precipitation reaction.

It can be understood that, in the present application, the specific types of raw material components such as the nickel source, the M' source, the M" source, and the lithium source are not particularly limited, and may be flexibly selected by those skilled in the art according to actual needs. For example, the M' source may include, but is not limited to, one or more of sulfate, carbonate, nitrate, chloride, silicate, acetate, oxalate, oxide, hydroxide, and the like; the M" source may include, but is not limited to, one or more of sulfate, nitrate, chloride, fluoride, oxalate, acetate, and the like; the lithium source may include, but is not limited to, one or more of $LiOH \cdot H_2O$, $Li_2CO_3$, $Li_2SO_4$, $LiNO_3$, $LiC_2O_4$, $CH_3COOLi$, and the like; other raw material components (e.g., a cobalt source or a manganese source) such as the nickel source may also each independently include, but are not limited to, one or more of sulfate, nitrate, carbonate, chloride, fluoride, oxalate, acetate, etc. In addition, in the operations of the first precipitation reaction, the second precipitation reaction, the third precipitation reaction, sintering, and the like, the controlled process parameters (such as pH value, reaction time, reaction temperature, heating rate, sintering atmosphere, and the like) are not particularly limited, and may be flexibly selected by those skilled in the art according to actual needs. For example, the temperature of each precipitation reaction may be 40-80 °C independently, and the pH value may be 11-14, optionally, 12-13; the sintering temperature may be 600-850 °C, optionally, 650-750 °C, the sintering time may be 8-18 h, optionally, 10-15 h, the heating rate may be 0.5-5 °C/min, optionally 1-3 °C/min, and the sintering atmosphere may be an air atmosphere, an oxygen atmosphere, a mixed atmosphere of oxygen and nitrogen or inert gas, and the like. In addition, the specific types of the precipitant and the complexing agent are not particularly limited in the present application, and may be flexibly selected by those skilled in the art according to actual needs. For example, the precipitant may include, but is not limited to, one or more of sodium hydroxide, sodium carbonate, potassium carbonate, and potassium hydroxide, and the complexing agent may include, but is not limited to, one or more of ammonium hydroxide, ammonium chloride, ammonium sulfate, urea, citric acid, ethylenediaminetetraacetic acid (EDTA), and the like.

As some specific examples, for the positive electrode active material with the core including $Li_{a1}Ni_{x1}Co_{y11}Mn_{y12}M'_{z1}O_{m1}R_{n1}$, the shell layer including $Li_{a2}Ni_{x2}Co_{y21}Mn_{y22}M'_{z2}O_{m2}R_{n2}$, and the intermediate layer including $M''_pO_q$, a preparation process thereof may specifically include: mixing a Ni salt, a Co salt, a Mn salt, and an M' source according to a preset proportion to prepare a mixed solution, pumping the mixed solution, a precipitant, and a complexing agent into a reaction kettle according to a certain pump speed, controlling the pH value of materials and the reaction temperature in the reaction kettle to perform a coprecipitation reaction, monitoring the particle size of particles in the reaction kettle (specifically, a small amount of product may be periodically discharged from a material discharging port in the lower portion of the reaction kettle to test the particle size, the reaction kettle used for reactions is usually large, and discharging a small amount of product has little effect on the reaction conditions and process), stopping pumping the mixed salt solution when the material particles in the kettle grow to have a particle size of 3/5-4/5 of the volume particle size Dv50 of target particles (i.e., precursor particles), pumping the solution formed by using the M" source into the reaction kettle, pumping the remaining mixed solution into the reaction kettle for reactions after the solution formed by the M" source is completely pumped, monitoring the particle size of the particles in the reaction kettle, so as to obtain precursor particles growing to have the volume particle size of the target particles. The obtained precursor particles are mixed with a lithium source, and sintering is performed to obtain the positive electrode active material. The sintering temperature may be 600-850 °C, optionally, 650-750 °C, the sintering time may be 8-18 h, optionally, 10-15 h, the heating rate may be 0.5-5 °C/min, optionally, 1-3 °C/min, and the sintering atmosphere may be an air atmosphere, an oxygen atmosphere, or a mixed atmosphere of oxygen and nitrogen or inert gas.

A third aspect of the present application provides a positive electrode plate. The positive electrode plate includes: the positive electrode active material in the first aspect of the present application, or the positive electrode active material prepared by the method in the second aspect of the present application.

In a battery, the positive electrode plate generally includes a positive electrode current collector and a positive electrode active substance layer disposed on the positive electrode current collector, and the positive electrode active substance layer includes a positive electrode active material.

The positive electrode current collector may be made of a conventional metal foil or be a composite current collector (a metal material may be disposed on a polymer substrate to form a composite current collector). As an example, the positive electrode current collector may include at least one of a copper foil, an aluminum foil, a nickel foil, a stainless steel foil, a stainless steel mesh, and a carbon-coated aluminum foil, optionally, an aluminum foil.

The positive electrode active substance layer may further optionally include at least one of a binder, a conductive agent, and other optional auxiliary agents. As an example, the conductive agent may include, but is not limited to, one or more of superconducting carbon, acetylene black, carbon black, Ketjen black, a carbon dot, a carbon nanotube, graphene, and a carbon nanofiber. As an example, the binder may include, but is not limited to, one or more of styrene butadiene rubber (SBR), a water-based acrylic resin, polyvinylidene difluoride

(PVDF), polytetrafluoroethylene (PTFE), an ethylene-vinyl acetate (EVA) copolymer, a polyacrylic acid (PAA), carboxymethyl cellulose (CMC), polyvinyl alcohol (PVA), and polyvinyl butyral (PVB).

These materials are all commercially available.

A fourth aspect of the present application provides a battery. The battery includes: the positive electrode plate in the third aspect of the present application. Therefore, the battery may have good cycling stability and long service life.

The battery refers to a battery that can continue to be used by activating an active material by means of charging after discharging.

It can be understood that the battery proposed by the present application is a lithium battery, such as a lithium-ion battery.

Typically, the battery includes a positive electrode plate, a negative electrode plate, a separator, and an electrolytic solution. During the charging and discharging process of the battery, active ions are intercalated and deintercalated back and forth between the positive electrode plate and the negative electrode plate. The separator is disposed between the positive electrode plate and the negative electrode plate for isolation. The electrolyte conducts ions between the positive electrode plate and the negative electrode plate.

[Negative Electrode Plate]

In the battery, the negative electrode plate generally includes a negative electrode current collector and a negative electrode active substance layer disposed on the negative electrode current collector, and the negative electrode active substance layer includes a negative electrode active material. The negative electrode current collector may be made of a conventional metal foil or be a composite current collector (for example, a metal material may be disposed on a polymer substrate to form a composite current collector). As an example, the negative electrode current collector may be made of a copper foil.

In some examples of the present application, the battery in the fourth aspect of the present application may be a lithium-ion battery. In this case, the specific kind of the negative electrode active material is not limited, and active materials known in the art that can be used for a negative electrode of the lithium-ion battery may be used, and those skilled in the art may select the active materials according to actual needs. As an example, the negative electrode active material may include, but is not limited to, at least one of lithium metal, a carbon material, an alloy material, a silicon-based material, a phosphorus-based material, and the like. Specifically, the carbon material may include, but is not limited to, at least one of hard carbon, soft carbon, amorphous carbon, and a nanostructured carbon material; the alloy material may include, but is not limited to, an alloy material formed by at least one of Si, Ge, Sn, Pb, and Sb; the silicon-based material may include, but is not limited to, a silicon-carbon material, silicon(II) oxide, and the like. These materials are all commercially available.

Typically, the negative electrode active substance layer may further optionally include a binder and a conductive agent, where the conductive agent is used for increasing conductivity of the negative electrode active substance layer, and the binder is used for firmly binding the negative electrode active material and the conductive agent to the negative electrode current collector. The types of the conductive agent and the binder are not particularly limited in the present application, and may be selected according to actual needs. As an example, the conductive agent may include at least one of superconducting carbon, acetylene black, carbon black, Ketjen black, a carbon dot, a carbon nanotube, graphene, and a carbon nanofiber. As an example, the binder may include at least one of SBR, styrene butadiene rubber (SBCs), a water-based acrylic resin, and CMC.

The negative electrode active substance layer may further optionally include a thickener, such as CMC. However, the present application is not limited thereto, and other materials which can be used as the thickener of the negative electrode plate of the lithium-ion battery may also be used in the present application.

In some examples of the present application, the battery in the fourth aspect of the present application may be a lithium metal battery. In this case, the negative electrode active material thereof may include, but is not limited to, elemental metal lithium. For example, the negative electrode active material may also be an alloy formed by metal lithium with various other metallic or nonmetallic elements.

In some examples of the present application, the battery in the fourth aspect of the present application may also be a lithium metal battery without a negative electrode. In this case, the negative electrode consists of only a metal foil current collector without lithium metal on the surface thereof, and during cycling, only lithium in a positive electrode is used, and is precipitated and stripped off in the form of metal lithium on the negative electrode side.

[Electrolytic Solution]

The electrolytic solution may include an electrolyte salt and a solvent.

As an example, the electrolyte lithium salt may include, but is not limited to, at least one of lithium hexafluorophosphate, lithium difluoro(oxalato)borate, lithium tetrafluoroborate, lithium bisoxalato borate, lithium perchlorate, lithium hexafluoroarsenate, lithium bis(fluorosulfonyl)imide, lithium trifluoromethylsulfonate, and lithium bis(trifluoromethylsulfonyl)imide.

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution may further include an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, and an additive for improving the low-temperature performance of the battery.

[Separator]

The present application has no particular limitation on the above separator, and any well-known porous-structured separator having electrochemical stability and mechanical stability may be selected according to actual needs. For example, the separator may include a single-layer or multi-layer film including at least one of glass fiber, nonwoven fabric, polyethylene, polypropylene, and PVDF.

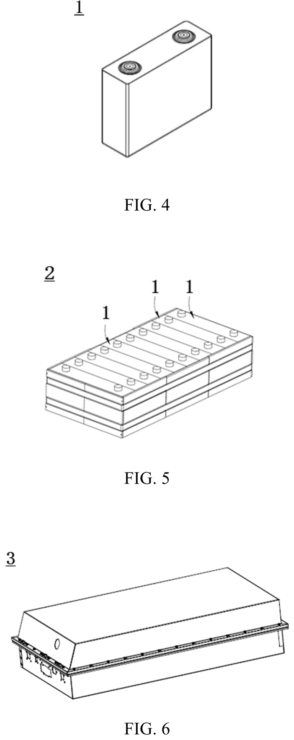

The examples of the present application do not particularly limit the shape of the battery, and it may have a cylindrical shape, a prismatic shape, or any other shape. For example, FIG. 4 shows a battery 1 having a prismatic structure as an example.

In some embodiments, the battery may include an outer packaging. The outer packaging is used for packaging the positive electrode plate, the negative electrode plate, and the electrolyte.

In some embodiments, the outer packaging may include a housing and a cover plate. The housing may include a bottom plate and a side plate connected to the bottom plate, and the bottom plate and the side plate define, in an enclosing manner, an accommodating cavity. The housing is provided with an opening in communication with the accommodating cavity, and the cover plate is capable of lidding the opening to close the accommodating cavity.

The positive electrode plate, the negative electrode plate, and the separator may be subjected to a winding process or a stacking process to form an electrode assembly. The electrode assembly is packaged in the accommodating cavity. The number of electrode assemblies included in the battery may be one or more and may be adjusted as needed.

In some embodiments, the outer packaging of the battery may be a hard shell, such as a hard plastic shell, an aluminum shell, or a steel shell.

The outer packaging of the battery may also be a soft pack, such as a pouch-type soft pack. The soft pack may be made of plastic. For example, the plastic may include at least one of polypropylene (PP), polybutylene terephthalate (PBT), and polybutylene succinate (PBS).

In some embodiments, the battery may be a battery cell, or a battery module formed by assembling battery cells or a battery pack, the number of batteries included in the battery module or the battery pack may be multiple, and the specific number may be adjusted according to the application and the capacity of the battery module.

FIG. 5 shows a battery module 2 as an example. Referring to FIG. 5, in the battery module 2, a plurality of batteries 1 may be sequentially arranged in a length direction of the battery module 2. Certainly, the arrangement may also be in any other manner. Further, the plurality of batteries 1 may be fixed by fasteners.

The battery module 2 may further include a shell having an accommodating space in which the plurality of batteries 1 are accommodated. In some embodiments, the above battery module may further be assembled into a battery pack; the number of the battery modules included in the battery pack may be adjusted based on the application and capacity of the battery pack.

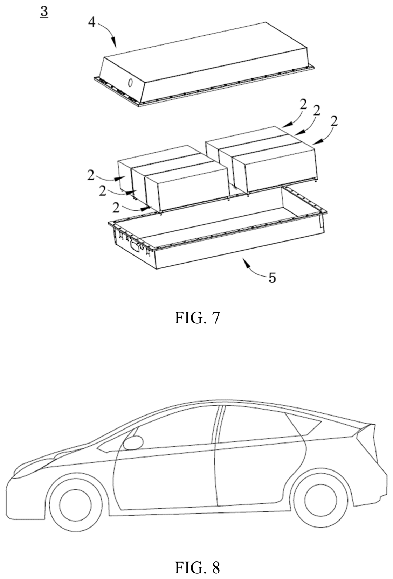

FIG. 6 and FIG. 7 show a battery pack 3 as an example. Referring to FIG. 6 and FIG. 7, the battery pack 3 may include a battery case and a plurality of battery modules 2 arranged in the battery case. The battery case includes an upper case body 4 and a lower case body 5. The upper case body 4 is capable of lidding the lower case body 5 to form a closed space for accommodating the battery modules 2. The plurality of battery modules 2 may be arranged in any manner in the battery case.

A fifth aspect of the present application provides an electric device. The electric device includes: the battery in the fourth aspect of the present application.

Specifically, the battery may be used as a power source of the electric device, and may also be used as an energy storage unit of the electric device. The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

FIG. 8 shows an electric device as an example. The electric device includes a pure electric vehicle, a hybrid electric vehicle, a plug-in hybrid electric vehicle, or the like. As another example, the electric device may include a mobile phone, a tablet computer, a notebook computer, or the like. The electric device is generally required to be light and thin, and a battery can thus be used as a power source.

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

**Example 1**

(I) Preparation of Positive Electrode Active Material

S1: Based on the stoichiometric ratio of $LiNi_{0.928}Mn_{0.07}Zr_{0.002}O_2$, nickel sulfate, manganese sulfate, and zirconium sulfate were mixed according to a molar ratio of element nickel in nickel sulfate, to element manganese in manganese sulfate, and to element zirconium in zirconium sulfate of 0.928:0.07:0.002 to prepare a mixed salt solution. A sodium hydroxide solution was used as a precipitant, ammonium hydroxide was used as a complexing agent, pure water and the precipitant were supplied into a reaction kettle, stirring was started, the mixture was kept at a constant temperature of 60 °C, stirring was started, and the mixed solution, a precipitant solution, and a complexing agent solution were supplied into the reaction kettle to perform a coprecipitation reaction. During the period, the concentration of ammonium hydroxide and the pH in the reaction kettle were controlled to be constant, a small amount of reaction product was periodically discharged from the lower portion of the reaction kettle to test the particle size Dv50, so as to monitor the particle size change condition of material particles in the reaction kettle, and the volume particle size Dv50 of precursor particles to be obtained was designed to be 12 $\mu$m. When the particle size of the material particles in the reaction kettle reached 3/5 of the particle size Dv50, i.e., 7.2 $\mu$m, the supply of the mixed salt solution into the reaction kettle was stopped, where the pH value in the reaction kettle was 11, and the concentration of ammonium hydroxide was 0.5 mol/L.

S2: A certain amount of aluminum nitrate solution was continuously supplied into the reaction kettle to continue the precipitation reaction until the aluminum nitrate solution was completely added.

S3: The mixed salt solution prepared in step S1 was continuously supplied into the reaction kettle to perform the coprecipitation reaction until the particle size Dv50 of the material particles in the reaction kettle reached 12 $\mu$m, and the reaction slurry was centrifuged, washed, filtered, and dried to obtain precursor particles.

S4: Based on the stoichiometric ratio of $LiNi_{0.928}Mn_{0.07}Zr_{0.002}O_2$, the precursor particles were mixed with lithium hydroxide according to a proportion, and sintering was performed to obtain a positive electrode active material, where the sintering temperature is 700 °C, the sintering time is 15 h, the heating rate is 5 °C/min, the sintering atmosphere is oxygen, and a molar ratio of element aluminum in aluminum nitrate in S2, to the total amount of element nickel, element manganese, and element zirconium in the mixed salt in S3, and to element lithium in lithium hydroxide is 0.005:1:1.

(II) Preparation of Battery

(1) Preparation of Positive Electrode Plate

The prepared positive electrode active material, a conductive agent acetylene black, and a binder PVDF were fully stirred and uniformly mixed in a proper amount of solvent N-methylpyrrolidone (NMP) according to a mass ratio of 94:3:3, then the mixture was coated on both sides of a 13 $\mu$m-thick aluminum foil with equal thickness, and the foil was dried and cold pressed to obtain a positive electrode plate, where the surface density of one-side coating of the positive electrode plate is 0.02 $g/cm^2$.

(2) Preparation of Negative Electrode Plate

A negative electrode active substance artificial graphite, hard carbon, a conductive agent acetylene black, a binder SBR, and a thickener sodium carboxymethylcellulose (CMC-Na) were fully stirred and uniformly mixed in a deionized water solvent system according to a weight ratio of 90:5:2:2:1, then the mixture was coated on both sides of a 6 $\mu$m-thick copper foil with equal thickness, and the foil was dried and cold pressed to obtain a negative electrode plate, where the surface density of one-side coating of the negative electrode plate is 0.012 $g/cm^2$.

(3) Preparation of Electrolytic Solution: EC, DEC, and DMC were mixed in equal volumes to obtain an organic solvent, and then $LiPF_6$ was dissolved in the above organic solvent to prepare an electrolytic solution with a concentration of 1 mol/L.

(4) Separator: A porous polyethylene film was used as a separator.

(5) Preparation of Battery

The positive electrode plate, the separator, and the negative electrode plate were stacked in sequence to enable the separator to be located between a positive electrode and a negative electrode for isolation, and wound to obtain a bare battery cell. The bare battery cell was placed in an outer packaging, and the prepared basic electrolytic solution was injected, followed by packaging to obtain a whole battery.

**Example 2**

The difference from Example 1 lies in that, in step S3, based on the stoichiometric ratio of $LiNi_{0.93}Mn_{0.07}O_2$, element nickel in nickel sulfate and element manganese in manganese sulfate were mixed according to a molar ratio of 0.93:0.07 to prepare a mixed salt solution, the prepared mixed salt solution was supplied into a reaction kettle to continue a coprecipitation reaction until the particle size Dv50 of material particles in the reaction kettle reaches 12 $\mu$m, and the reaction slurry was centrifuged, washed, filtered, and dried to obtain precursor particles.

**Comparative Example 1**

The differences from Example 2 lie in that, in both steps S1 and S3, based on the stoichiometric ratio of $LiNi_{0.93}Mn_{0.07}O_2$, element nickel in nickel sulfate and element manganese in manganese sulfate were mixed according to a molar ratio of 0.93:0.07 to prepare a mixed salt solution, as detailed in Table 1.

**Comparative Example 2**

The difference from Example 2 lies in that step S2 is not performed.

**Comparative Example 3**

The differences from Example 2 lie in that steps S2 and S3 are not performed, and step S1 is as follows: Based on the stoichiometric ratio of $LiNi_{0.93}Mn_{0.07}O_2$, element nickel in nickel sulfate and element manganese in manganese sulfate were mixed according to a molar ratio of 0.93:0.07 to prepare a mixed salt solution. A sodium hydroxide solution was used as a precipitant, ammonium hydroxide was used as a complexing agent, pure water and the precipitant were supplied into a reaction kettle, stirring was started, the mixture was kept at a constant temperature of 60 °C, stirring was started, and the mixed salt solution, a precipitant solution, and a complexing agent solution were supplied into the reaction kettle according to a certain flow rate ratio to perform a coprecipitation reaction. During the period, the concentration of ammonium hydroxide and the pH in the reaction kettle were controlled to be constant, and the particle size change condition of material particles in the reaction kettle was monitored until the volume particle size Dv50 of the particles grew to be 12 $\mu$m, where the pH value in the reaction kettle was 11, and the concentration of ammonium hydroxide was 0.5 mol/L.

**Example 3**

The difference from Example 1 lies in that, in step S1, a mixed salt solution was prepared according to the core material shown in Table 1.

**Example 4**

The difference from Example 3 lies in that, in step S3, a mixed salt solution was prepared according to the shell layer material shown in Table 1.

**Comparative Example 4**

The differences from Example 4 lie in that, in step S1, a mixed salt solution was prepared according to the core material shown in Table 1, and in step S3, a mixed salt solution was prepared according to the shell layer material shown in Table 1.

**Comparative Example 5**

The difference from Example 4 lies in that step S2 is not performed.

**Comparative Example 6**

The differences from Example 4 lie in that steps S2 and S3 are not performed, and step S1 is as follows: Based on the stoichiometric ratio of $LiNi_{0.91}Co_{0.07}Mn_{0.02}O_2$, nickel sulfate, manganese sulfate, and cobalt sulfate were mixed according to a preset stoichiometric ratio to prepare a mixed salt solution. A sodium hydroxide solution was used as a precipitant, ammonium hydroxide was used as a complexing agent, pure water and the precipitant were supplied into a reaction kettle, stirring was started, the mixture was kept at a constant temperature of 60 °C, stirring was started, and the mixed solution, a precipitant solution, and a complexing agent solution were supplied into the reaction kettle according to a certain flow rate ratio to perform a coprecipitation reaction. During the period, the concentration of ammonium hydroxide and the pH in the reaction kettle were controlled to be constant, and the particle size change condition of material particles in the reaction kettle was monitored until the volume particle size Dv50 of the particles grew to be 12 μm, where the pH value in the reaction kettle was 11, and the concentration of ammonium hydroxide was 0.5 mol/L.

**Examples 5-34**

Examples 5-8 differ from Example 3 in that the core material and the shell layer material based on which the mixed salt solution was prepared in steps S1 and S3 are different, as detailed in Table 1.

Examples 9-11 differ from Example 3 in that the amount of aluminum nitrate in step S2 is different, and the ratio of total mole numbers of Al and Li in the prepared positive electrode active material is different, as detailed in Table 1.

Example 12 differs from Example 3 in that the core material and the shell layer material based on which the mixed salt solution was prepared in steps S1 and S3 are different, and the amount of aluminum nitrate in step S2 is different, as detailed in Table 1.

Example 13 differs from Example 12 in that, in step S2, aluminum nitrate was replaced by silicic acid ($H_2SiO_3$), i.e., M" was Si, and the intermediate layer material and the amount of Si are detailed in Table 1.

Example 14 differs from Example 12 in that, in step S2, aluminum nitrate was replaced by boric acid ($H_3BO_3$), i.e., M" was B, and the intermediate layer material and the amount of Si are detailed in Table 1.

Examples 15-24 differ from Example 12 in that the core material and the shell layer material based on which the mixed salt solution was prepared in steps S1 and S3 are different, as detailed in Table 1.

Examples 25-29 differ from Example 12 in that the amount of aluminum nitrate in step S2 is different, and the upper limit value and/or the lower limit value of the distance from the intermediate layer to the center of the core are/is different, as detailed in Table 1.

Examples 30 and 31 differ from Example 12 in that the pH value in the reaction kettle and the concentration of ammonium hydroxide are different (the pH value in the reaction kettle was 10.8 and the concentration of ammonium hydroxide was 0.8 mol/L in Example 30; the pH value in the reaction kettle was 11.2 and the concentration of ammonium hydroxide was 0.4 mol/L in Example 31), and the value of $\dfrac{D_v90 - D_v10}{D_v50}$ in the prepared positive electrode active material is different, as detailed in Table 1.

Examples 32-34 differ from Example 12 in that the core material and the shell layer material based on which the mixed salt solution was prepared in steps S1 and S3 are different, as detailed in Table 1.

**Test Method:**

(a) Test of the element composition of the positive electrode active material by an inductively coupled plasma optical emission spectrometry

The instrument standard refers to EPA6010D-2014 "Inductively Coupled Plasma Atomic Emission Spectrometry". A positive electrode active material sample was chemically treated and digested into a solution, the solution was atomized and entered a plasma to be excited to generate a characteristic spectral line of an element, the element content was qualitatively and quantitatively analyzed according to the wavelength and the intensity (which were in direct proportion to the concentration) of the spectral line, and the relative molar ratio of Li and M" in the positive electrode active material prepared in each example and comparative example was obtained. The specific operation steps were as follows: adding 0.4 g (accurate to 0.0001 g) of dry positive electrode active material sample to a 30 ml digestion tank, keeping one digestion tank without the sample as a blank sample, moving the digestion tank with the sample into a fume hood, adding 12 ml of Lefort aqua regia along the inner wall of the digestion tank so as to flush a residual sample on the inner wall to a tank bottom, then sequentially installing a top cover, a heat insulation sleeve, a gasket, a microwave digestion apparatus, and a nut, screwing the nut by using a wrench, then opening the microwave digestion instrument, inserting an optical fiber sensor in the microwave digestion instrument into the bottom of the previously assembled digestion tank with the sample, placing the digestion tank into the microwave digestion instrument in a balanced manner, starting digestion (according to a digestion program, where the temperature was raised to 120 °C in 6 min and maintained for 8 min, the temperature was raised to 160 °C in 5 min and maintained for 8 min, and the temperature was raised to 180 °C in 5 min and maintained for 5 min), cooling to a room temperature after the digestion was finished, taking out the digestion tank, placing the digestion tank into the fume hood, slowly screwing out the nut for gas release, sequentially removing the previously installed parts, transferring a solution in the digestion tank via a funnel (which needed to be padded with a piece of filter paper) into a 100 ml volumetric flask, subsequently rinsing the digestion tank with ultrapure water, transferring a rinsing liquid into the volumetric flask, where 10 ml of ultrapure water was used for each rinsing, shaking up the solution in the 100 ml volumetric flask, taking 1 ml of the shaken solution with a pipette and adding the same into another 100 ml volumetric flask, then filling up to a mark with ultrapure water (the total volume of the solution amounted to 100 ml), and finally testing the sample solution by using an inductively coupled plasma optical emission spectrometer (ICP-OES). The Lefort aqua regia is prepared by mixing ultrapure water, concentrated nitric acid, and concentrated hydrochloric acid according to a volume ratio of 4:3:1, where both the concentrated nitric acid and the concentrated sulfuric acid have a mass concentration of 68%, and are obtained by purchasing commercial products.

(b) Test of the particle size of particles, and the thickness and position of the intermediate layer

The Dv50, Dv90, and Dv10 of the positive electrode active material prepared in each example and comparative example were separately tested by using a laser particle size analyzer with reference to the standard GB/T 19077-2016/ISO 13320:2009 to calculate the volume particle size distribution: (Dv90-Dv10)/Dv50.

The thickness of the intermediate layer and the distance from the intermediate layer to the center of the core were determined with reference to the following method: taking Example 1 as an example, taking the reaction slurries prepared in steps S1, S2, and S3 for centrifuging, washing, filtering, and drying to obtain particles, sequentially denoting the obtained particles as first particles, second particles, and precursor particles, under the same conditions, mixing lithium hydroxide and the particles prepared in steps S1, S2, and S3 according to the same molar ratio of Li and Ni and performing sintering under the same sintering condition as in step S4, and after cooling, testing the volume particle size Dv50 of the first particles, the second particles, and the precursor particles after being sintered with lithium hydroxide by using the laser particle size analyzer with reference to the standard GB/T 19077-2016/ISO 13320:2009. One half of the volume particle size Dv50 of the first particles after being sintered with lithium hydroxide was equivalent to the distance from the inner surface of the intermediate layer to the center of the core, one half of the volume particle size Dv50 of the second particles after being sintered with lithium hydroxide was equivalent to the distance from the outer surface of the intermediate layer to the center of the core, one half of a difference between the volume particle size Dv50 of the second particles after being sintered with lithium hydroxide and the volume particle size Dv50 of the first particles after being sintered with lithium hydroxide was equivalent to the thickness of the intermediate layer, and the distances from the inner surface and the outer surface of the intermediate layer to the center of the core and the thickness of the intermediate layer were evaluated based on the volume particle size Dv50 (denoted as D1) of the precursor particles after being sintered with lithium hydroxide. The methods for evaluating the thickness of the intermediate layer and the positional relationship of the intermediate layer in the remaining examples and comparative examples are adaptively adjusted with reference to Example 1.

(c) Characterization of a microstructure of a cut section of the positive electrode active material

The prepared positive electrode plate was cut by using an ion beam sputtering method to obtain the cross section of the positive electrode plate. The cross section of the positive electrode plate was observed by using a scanning electron microscope, and the appearance of the cross section of the cut positive electrode active material particles in a cross-sectional region was observed.

(d) Test of the initial specific capacity and the cycle capacity retention rate:

The battery was left to stand under a constant temperature environment of 25 °C for 5 min, discharged to 2.8 V at 0.33C, after standing for 5 min, charged to 4.25 V at 0.33C, then charged at a constant voltage of 4.25 V until the current was $\leq 0.05$ mA, and after standing for 5 min, discharged to 2.8 V at 0.33C, where the discharge capacity at the moment was the initial specific capacity and denoted as $D_0$. Then, the battery was charged to 4.25 V at 1C, then charged at a constant voltage of 4.25 V until the current was $\leq 0.05$ mA, and after standing for 5 min, discharged to 2.8 V at 1C. The capacity was denoted as $D_n$ (n = 1, 2 ...). The previous processes were repeated to perform charge-discharge cycles, and the discharge specific capacity of the $100_{th}$ cycle was denoted as $D_{100}$, where the discharge capacity retention rate of the $100_{th}$ cycle was = $D_{100}/D_0 \times 100\%$.

(e) Surface test of particles of the positive electrode active material

The initial surface condition of the positive electrode active material and the surface cracking condition after 100 charge-discharge cycles were characterized by using a scanning electron microscope. A whole battery after 100 charge-discharge cycles was disassembled to obtain a positive electrode plate, the positive electrode plate was cleaned to remove a residual electrolytic solution on the surface thereof, the positive electrode plate was soaked by using NMP until a binder was completely removed, after drying, a powder mixture of a conductive agent and the particles of the positive electrode active material was obtained, the powder mixture was sieved or directly characterized (the particle size of the particles of the positive electrode active material was significantly different from the particle size of the conductive agent), a microstructure of the surface of the particles of the positive electrode active material was observed, and the cracking condition was evaluated, where "/" represented almost no cracking, "+" represented slight cracking, "++" represented partial cracking, and "+++" represented serious cracking.

(f) Test of the volumetric energy density of the battery

The obtained battery was subjected to a charge-discharge test at 0.33C on a charge-discharge tester, and after being charged to 4.35 V at a rate of 0.33C, charged at a constant voltage until the current was ≤ 0.05C. Subsequently, the battery was discharged to 2.8 V at 0.33C, and a discharge capacity C1 (in Ah) and a discharge medium voltage V1 (in V) were recorded. The total volume of the battery was measured to obtain v1 (in L). The volumetric energy density of the battery = C1 × V1/v1.

Relevant tests were carried out on Examples 1-34 and Comparative Examples 1-6, and the test results are detailed in Tables 1 and 2.

Table 1 Differences of Examples 1-34 from Comparative Examples 1-6 and test results

| Examples and Comparative Examples | Core | Shell layer | Intermediate layer | A ratio of total mole numbers of M'' and Li | Distance from the inner surface of the intermediate layer to the center of the core | Distance from the outer surface of the intermediate layer to the center of the core | Thickness of the intermediate layer | $\dfrac{D_p90 - D_p10}{D_p50}$ | Discharge capacity retention rate after 100 cycles | Degree of surface cracking of the particles of the positive electrode active material |
|---|---|---|---|---|---|---|---|---|---|---|
| Example 1 | $LiNi_{0.928}Mn_{0.07}Zr_{0.002}O_2$ | $LiNi_{0.928}Mn_{0.07}Zr_{0.002}O_2$ | $Al_2O_3$ | 0.005 | 0.32D1 | 0.37D1 | 0.05D1 | 1.1 | 93.70% | / |
| Example 2 | $LiNi_{0.928}Mn_{0.07}Zr_{0.002}O_2$ | $LiNi_{0.93}Mn_{0.07}O_2$ | $Al_2O_3$ | 0.005 | 0.32D1 | 0.37D1 | 0.05D1 | 1.1 | 92.10% | / |
| Comparative Example 1 | $LiNi_{0.93}Mn_{0.07}O_2$ | $LiNi_{0.93}Mn_{0.07}O_2$ | $Al_2O_3$ | 0.005 | 0.32D1 | 0.37D1 | 0.05D1 | 1.1 | 87.80% | + |
| Comparative Example 2 | $LiNi_{0.928}Mn_{0.07}Zr_{0.002}O_2$ | $LiNi_{0.93}Mn_{0.07}O_2$ | / | / | / | / | / | 1.1 | 86.60% | ++ |
| Comparative Example 3 | $LiNi_{0.93}Mn_{0.07}O_2$ | $LiNi_{0.93}Mn_{0.07}O_2$ | / | / | / | / | / | 1.1 | 85.10% | +++ |
| Example 3 | $LiNi_{0.908}Co_{0.07}Mn_{0.02}Zr_{0.002}O_2$ | $LiNi_{0.908}Co_{0.07}Mn_{0.02}Zr_{0.002}O_2$ | $Al_2O_3$ | 0.005 | 0.32D1 | 0.37D1 | 0.05D1 | 1.1 | 95.70% | / |
| Example 4 | $LiNi_{0.908}Co_{0.07}Mn_{0.02}Zr_{0.002}O_2$ | $LiNi_{0.91}Co_{0.07}Mn_{0.02}O_2$ | $Al_2O_3$ | 0.005 | 0.32D1 | 0.37D1 | 0.05D1 | 1.1 | 94.90% | / |
| Comparative Example 4 | $LiNi_{0.91}Co_{0.07}Mn_{0.02}O_2$ | $LiNi_{0.91}Co_{0.07}Mn_{0.02}O_2$ | $Al_2O_3$ | 0.005 | 0.32D1 | 0.37D1 | 0.05D1 | 1.1 | 90.20% | + |
| Comparative Example 5 | $LiNi_{0.908}Co_{0.07}Mn_{0.02}Zr_{0.002}O_2$ | $LiNi_{0.91}Co_{0.07}Mn_{0.02}O_2$ | / | / | / | / | / | 1.1 | 88.20% | ++ |
| Comparative Example 6 | $LiNi_{0.91}Co_{0.07}Mn_{0.02}O_2$ | $LiNi_{0.91}Co_{0.07}Mn_{0.02}O_2$ | / | / | / | / | / | 1.1 | 87.90% | +++ |
| Example 5 | $LiNi_{0.905}Co_{0.07}Mn_{0.02}Zr_{0.005}O_2$ | $LiNi_{0.905}Co_{0.07}Mn_{0.02}Zr_{0.005}O_2$ | $Al_2O_3$ | 0.005 | 0.32D1 | 0.37D1 | 0.05D1 | 1.1 | 96.50% | / |
| Example 6 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.005 | 0.32D1 | 0.37D1 | 0.05D1 | 1.1 | 97.10% | / |
| Example 7 | $LiNi_{0.9}Co_{0.07}Mn_{0.02}Zr_{0.01}O_2$ | $LiNi_{0.9}Co_{0.07}Mn_{0.02}Zr_{0.001}O_2$ | $Al_2O_3$ | 0.005 | 0.32D1 | 0.37D1 | 0.05D1 | 1.1 | 97.80% | / |
| Example 8 | $LiNi_{0.89}Co_{0.07}Mn_{0.02}Zr_{0.02}O_2$ | $LiNi_{0.89}Co_{0.07}Mn_{0.02}Zr_{0.02}O_2$ | $Al_2O_3$ | 0.005 | 0.32D1 | 0.37D1 | 0.05D1 | 1.1 | 98.40% | / |
| Example 9 | $LiNi_{0.908}Co_{0.07}Mn_{0.02}Zr_{0.002}O_2$ | $LiNi_{0.908}Co_{0.07}Mn_{0.02}Zr_{0.002}O_2$ | $Al_2O_3$ | 0.008 | 0.32D1 | 0.375D1 | 0.055D1 | 1.1 | 96.20% | / |
| Example 10 | $LiNi_{0.908}Co_{0.07}Mn_{0.02}Zr_{0.002}O_2$ | $LiNi_{0.908}Co_{0.07}Mn_{0.02}Zr_{0.002}O_2$ | $Al_2O_3$ | 0.012 | 0.32D1 | 0.38D1 | 0.06D1 | 1.1 | 96.40% | / |
| Example 11 | $LiNi_{0.908}Co_{0.07}Mn_{0.02}Zr_{0.002}O_2$ | $LiNi_{0.908}Co_{0.07}Mn_{0.02}Zr_{0.002}O_2$ | $Al_2O_3$ | 0.02 | 0.32D1 | 0.3825D1 | 0.0625D1 | 1.1 | 96.80% | / |

| Examples and Comparative Examples | Core | Shell layer | Intermediate layer | A ratio of total mole numbers of M" and Li | Distance from the inner surface of the intermediate layer to the center of the core | Distance from the outer surface of the intermediate layer to the center of the core | Thickness of the intermediate layer | $\frac{D_v90 - D_v10}{D_v50}$ | Discharge capacity retention rate after 100 cycles | Degree of surface cracking of the particles of the positive electrode active material |
|---|---|---|---|---|---|---|---|---|---|---|
| Example 12 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.02 | 0.32D1 | 0.3825D1 | 0.0625D1 | 1.1 | 97.10% | / |
| Example 13 | $LiNi_{0.902}Co_{0.07}Mn_{0.02}Zr_{0.008}O_2$ | $LiNi_{0.902}Co_{0.07}Mn_{0.02}Zr_{0.008}O_2$ | $SiO_2$ | 0.02 | 0.32D1 | 0.36D1 | 0.04D1 | 1.1 | 96.30% | / |
| Example 14 | $LiNi_{0.902}Co_{0.07}Mn_{0.02}Zr_{0.008}O_2$ | $LiNi_{0.902}Co_{0.07}Mn_{0.02}Zr_{0.008}O_2$ | $B_2O_3$ | 0.02 | 0.32D1 | 0.355D1 | 0.035D1 | 1.1 | 96.10% | / |
| Example 15 | $LiNi_{0.902}Co_{0.07}Mn_{0.02}Y_{0.008}O_2$ | $LiNi_{0.902}Co_{0.07}Mn_{0.02}Y_{0.008}O_2$ | $Al_2O_3$ | 0.02 | 0.32D1 | 0.3825D1 | 0.0625D1 | 1.1 | 96.50% | / |
| Example 16 | $LiNi_{0.902}Co_{0.07}Mn_{0.02}La_{0.008}O_2$ | $LiNi_{0.902}Co_{0.07}Mn_{0.02}La_{0.008}O_2$ | $Al_2O_3$ | 0.02 | 0.32D1 | 0.3825D1 | 0.0625D1 | 1.1 | 96.10% | / |
| Example 17 | $LiNi_{0.902}Co_{0.07}Mn_{0.02}Mo_{0.008}O_2$ | $LiNi_{0.902}Co_{0.07}Mn_{0.02}Mo_{0.008}O_2$ | $Al_2O_3$ | 0.02 | 0.32D1 | 0.3825D1 | 0.0625D1 | 1.1 | 97.20% | / |
| Example 18 | $LiNi_{0.902}Co_{0.07}Mn_{0.02}Ti_{0.008}O_2$ | $LiNi_{0.902}Co_{0.07}Mn_{0.02}Ti_{0.008}O_2$ | $Al_2O_3$ | 0.02 | 0.32D1 | 0.3825D1 | 0.0625D1 | 1.1 | 95.40% | / |
| Example 19 | $LiNi_{0.902}Co_{0.07}Mn_{0.02}W_{0.008}O_2$ | $LiNi_{0.902}Co_{0.07}Mn_{0.02}W_{0.008}O_2$ | $Al_2O_3$ | 0.02 | 0.32D1 | 0.3825D1 | 0.0625D1 | 1.1 | 96.70% | / |
| Example 20 | $LiNi_{0.902}Co_{0.07}Mn_{0.02}Sb_{0.008}O_2$ | $LiNi_{0.902}Co_{0.07}Mn_{0.02}Sb_{0.008}O_2$ | $Al_2O_3$ | 0.02 | 0.32D1 | 0.3825D1 | 0.0625D1 | 1.1 | 95.50% | / |
| Example 21 | $LiNi_{0.902}Co_{0.07}Mn_{0.02}Nb_{0.008}O_2$ | $LiNi_{0.902}Co_{0.07}Mn_{0.02}Nb_{0.008}O_2$ | $Al_2O_3$ | 0.02 | 0.32D1 | 0.3825D1 | 0.0625D1 | 1.1 | 95.10% | / |
| Example 22 | $LiNi_{0.902}Co_{0.07}Mn_{0.02}Te_{0.008}O_2$ | $LiNi_{0.902}Co_{0.07}Mn_{0.02}Te_{0.008}O_2$ | $Al_2O_3$ | 0.02 | 0.32D1 | 0.3825D1 | 0.0625D1 | 1.1 | 96.70% | / |
| Example 23 | $LiNi_{0.902}Co_{0.07}Mn_{0.02}Sr_{0.008}O_2$ | $LiNi_{0.902}Co_{0.07}Mn_{0.02}Sr_{0.008}O_2$ | $Al_2O_3$ | 0.02 | 0.32D1 | 0.3825D1 | 0.0625D1 | 1.1 | 97.60% | / |
| Example 24 | $LiNi_{0.902}Co_{0.07}Mn_{0.02}Ga_{0.008}O_2$ | $LiNi_{0.902}Co_{0.07}Mn_{0.02}Ga_{0.008}O_2$ | $Al_2O_3$ | 0.02 | 0.32D1 | 0.3825D1 | 0.0625D1 | 1.1 | 96.20% | / |
| Example 25 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.025 | 0.2D1 | 0.3D1 | 0.1D1 | 1.1 | 94.20% | / |
| Example 26 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.025 | 0.35D1 | 0.414D1 | 0.064D1 | 1.1 | 94.60% | / |
| Example 27 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.03 | 0.25D1 | 0.4D1 | 0.15D1 | 1.1 | 94.70% | / |
| Example 28 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.02 | 0.35D1 | 0.41D1 | 0.06D1 | 1.1 | 93.20% | / |
| Example 29 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.005 | 0.35D1 | 0.395D1 | 0.045D1 | 1.1 | 94.20% | / |
| Example 30 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.02 | 0.32D1 | 0.3825D1 | 0.0625D1 | 1 | 96.30% | 1 |
| Example 31 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.02 | 0.32D1 | 0.3825D1 | 0.0625D1 | 1.2 | 95.20% | / |
| Example 32 | $LiNi_{0.692}Co_{0.15}Mn_{0.15}Zr_{0.008}O_2$ | $LiNi_{0.692}Co_{0.15}Mn_{0.15}Zr_{0.008}O_2$ | $Al_2O_3$ | 0.02 | 0.32D1 | 0.3825D1 | 0.0625D1 | 1.1 | 97.70% | / |
| Example 33 | $LiNi_{0.792}Co_{0.1}Mn_{0.1}Zr_{0.008}O_2$ | $LiNi_{0.792}Co_{0.1}Mn_{0.1}Zr_{0.008}O_2$ | $Al_2O_3$ | 0.02 | 0.32D1 | 0.3825D1 | 0.0625D1 | 1.1 | 96.70% | / |

EP 4 657 559 A1

(continued)

| Examples and Comparative Examples | Core | Shell layer | Intermediate layer | A ratio of total mole numbers of M" and Li | Distance from the inner surface of the intermediate layer to the center of the core | Distance from the outer surface of the intermediate layer to the center of the core | Thickness of the intermediate layer | $\frac{D_v90 - D_v10}{D_v50}$ | Discharge capacity retention rate after 100 cycles | Degree of surface cracking of the particles of the positive electrode active material |
|---|---|---|---|---|---|---|---|---|---|---|
| Example 34 | $LiNi_{0.892}Co_{0.05}Mn_{0.008}Zr_{0.008}O_2$ | $LiNi_{0.892}Co_{0.05}Mn_{0.05}Zr_{0.008}O_2$ | $Al_2O_3$ | 0.02 | 0.32D1 | 0.3825D1 | 0.0625D1 | 1.1 | 96.50% | / |

Table 2 Differences of Examples 9-12, 30, and 31 and test results

| Examples | Core | Shell layer | Intermediate layer | A ratio of total mole numbers of Al and Li | Distance from the inner surface of the intermediate layer to the center of the core | Distance from the outer surface of the intermediate layer to the center of the core | Thickness of the intermediate layer | $D_v 90 - D_v 10$ | Discharge capacity retention rate after 100 cycles | Volumetric energy density (Wh/L) of the battery |
|---|---|---|---|---|---|---|---|---|---|---|
| Example 9 | $LiNi_{0.908}Co_{0.07}Mn_{0.02}Zr_{0.002}O_2$ | $LiNi_{0.908}Co_{0.07}Mn_{0.02}Zr_{0.008}O_2$ | $Al_2O_3$ | 0.008 | 0.32D1 | 0.375D1 | 0.055D1 | 1.1 | 96.20% | 608 |
| Example 10 | $LiNi_{0.908}Co_{0.07}Mn_{0.02}Zr_{0.002}O_2$ | $LiNi_{0.908}Co_{0.07}Mn_{0.02}Zr_{0.002}O_2$ | $Al_2O_3$ | 0.012 | 0.32D1 | 0.38D1 | 0.06D1 | 1.1 | 96.40% | 605 |
| Example 11 | $LiNi_{0.908}Co_{0.07}Mn_{0.02}Zr_{0.002}O_2$ | $LiNi_{0.908}Co_{0.07}Mn_{0.02}Zr_{0.002}O_2$ | $Al_2O_3$ | 0.02 | 0.32D1 | 0.3825D1 | 0.0625D1 | 1.1 | 96.80% | 602 |
| Example 12 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.02 | 0.32D1 | 0.3825D1 | 0.0625D1 | 1.1 | 97.10% | 602 |
| Example 30 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.02 | 0.32D1 | 0.3825D1 | 0.0625D1 | 1 | 96.30% | 600 |
| Example 31 | $LiNi_{0.902}Co_{0.07}Mn_{0.02}Zr_{0.008}O_2$ | $LiNi_{0.902}Co_{0.07}Mn_{0.02}Zr_{0.008}O_2$ | $Al_2O_3$ | 0.02 | 0.32D1 | 0.3825D1 | 0.0625D1 | 1.2 | 95.20% | 611 |

Results and conclusions:

It can be known from the data of Examples 1-34 and Comparative Examples 1-6 and Table 1 that the cracking condition of the positive electrode active material in the charge-discharge cycle process can be effectively alleviated and the capacity retention rate in the charge-discharge process thereof can be improved by using the scheme of the above examples of the present application. In addition, when the cross sections of the positive electrode plates prepared in Examples 1-34 are characterized by using the scanning electron microscope, it can be seen that a significant porous structure exists between the interior and the outer surface layer of the cut particles of the positive electrode active material in the cross-sectional region (taking Example 1 and Comparative Example 2 as examples, FIG. 2 and FIG. 3 respectively show sectional views of individual particles of the positive electrode active material in the cross section of the positive electrode plate, and by comparing FIG. 2 with FIG. 3, it can be seen that the positive electrode active material in Example 1 has an intermediate layer with a porous structure), which further illustrates that the intermediate layer with the porous structure exists in the positive electrode active material prepared by the methods of the above examples of the present application. In combination with Examples 1-4 and Comparative Examples 1-6, it can be known that compared with the case where element M' is doped in the core alone or the intermediate layer is formed alone, a synergistic effect can be achieved by combining the two schemes, such that the cracking condition of the positive electrode active material in the charge-discharge cycle process can be further alleviated. In addition, in combination with Examples 1-34, it can be known that the methods of the above examples of the present application may be applicable to different Ni-containing layered positive electrode active materials. Further, in combination with Examples 3, 4, and 12-24, it can be known that changing the type of the element M' and the M" source forming the intermediate layer can also have the effects of alleviating the cracking condition of the positive electrode active material in the charge-discharge cycle process and increasing the capacity retention rate thereof in the charging and discharging process. Furthermore, in combination with Examples 3-11, it can be known that controlling the doping amount of M' and the amount of the M" source forming the intermediate layer with respect to the amount of lithium in the given ranges is beneficial for further improving the cycle capacity retention rate of the positive electrode active material while achieving a high energy density. In addition, in combination with Examples 25-28, it can be known that controlling the distances from the inner surface and the outer surface of the intermediate layer to the center of the core and the thickness distribution of the intermediate layer in the given ranges is also beneficial for further improving the cycle capacity retention rate of the positive electrode active material. Further, in combination with Examples 12, 30, and 31, it can be known that increasing the volume particle size distribution width of the positive electrode active material is beneficial for further obtaining a high energy density.

Finally, it should be noted that the above examples are only used to illustrate the technical solutions of the present application, rather than limit same. Although the present application has been described in detail with reference to the foregoing examples, those of ordinary skill in the art will appreciate that modifications can still be made to the technical solutions recorded in the foregoing examples, or equivalent substitutions to some or all of the technical features can be made. However, such modifications or substitutions do not make the spirit of the corresponding technical solutions deviate from the scope of the technical solutions in the examples of the present application, and shall all fall within the scope of claims and the specification of the present application. In particular, the technical features mentioned in the examples can be combined in any manner, provided that there is no structural conflict. The present application is not limited to the specific examples disclosed herein but includes all the technical solutions that fall within the scope of the claims.

**Claims**

1. A positive electrode active material, comprising:

   a core, wherein the core comprises $Li_{a1}Ni_{x1}M_{y1}M'_{z1}O_{m1}R_{n1}$, wherein $0.9 \leq a1 \leq 1.1$, $0.6 \leq x1 < 1$, $0 \leq y1 \leq 0.4$, $0 < z1 \leq 0.01$, $1.9 \leq m1 \leq 2.2$, and $0 \leq n1 \leq 0.1$; M comprises at least one element of Co, Mn, Al, Ta, Mg, Mo, Ga, Sn, Ge, Te, La, and Ce; M' comprises at least one element of Y, La, Mo, Zr, W, Sb, Nb, Te, Sr, Ti, or Ga; and R comprises at least one element of F, Cl, or S;
   an intermediate layer, wherein the intermediate layer wraps at least a part of an outer surface of the core and is provided with a porous structure; and
   a shell layer, wherein the shell layer wraps at least a part of an outer surface of the intermediate layer and comprises $Li_{a2}Ni_{x2}M_{y2}M'_{z2}O_{m2}R_{n2}$, wherein $0.9 \leq a2 \leq 1.1$, $0.6 \leq x2 < 1$, $0 \leq y2 \leq 0.4$, $0 \leq z2 \leq 0.01$, $1.9 \leq m2 \leq 2.2$, and $0 \leq n2 \leq 0.1$.

2. The positive electrode active material according to claim 1, wherein the intermediate layer comprises: $M''_pO_q$, wherein $1 \leq p \leq 2$, $2 \leq q \leq 3$, and M" comprises at least one element of B, Al, or Si.

3. The positive electrode active material according to claim 2, wherein in the positive electrode active material, a ratio of a mole number of element M" to a mole number of element Li is (0.005-0.02):(0.9-1.1).

4. The positive electrode active material according to claim 2 or 3, wherein in the positive electrode active material, the ratio of the mole number of the element M" to the mole number of the element Li is (0.008-0.012):(0.9-1.1).

5. The positive electrode active material according to any one of claims 1-4, wherein $z2 > 0$.

6. The positive electrode active material according to any one of claims 1-5, wherein

the core comprises: $Li_{a1}Ni_{x1}Co_{y11}Mn_{y12}M'_{z1}O_{m1}R_{n1}$, wherein $0 \leq y11 \leq 0.2$, $0 \leq y12 \leq 0.2$, and y11 and y12 are not zero simultaneously; and/or
the shell layer comprises: $Li_{a2}Ni_{x2}Co_{y21}Mn_{y22}M'_{z2}O_{m2}R_{n2}$, wherein $0 \leq y21 \leq 0.2$, $0 \leq y22 \leq 0.2$, and y21 and y22 are not zero simultaneously.

7. The positive electrode active material according to any one of claims 1-6, wherein

$$0.002 \leq z1 \leq 0.008;$$

and/or

$$0.002 \leq z2 \leq 0.008.$$

8. The positive electrode active material according to any one of claims 1-7, wherein a particle size of particles of the positive electrode active material is $D_1$, a distance from an inner surface of the intermediate layer to a center of the core is greater than or equal to $0.3D_1$, and a distance from an outer surface of the intermediate layer to the center of the core is less than or equal to $0.4D_1$; and/or
a thickness of the intermediate layer is $0.05D_1$-$0.0625D_1$.

9. The positive electrode active material according to any one of claims 1-8, wherein a volume particle size distribution of the positive electrode active material satisfies: $\frac{D_v90 - D_v10}{D_v50} \geq \geq 1.1$; and/or
a volume average particle size Dv50 of the positive electrode active material is 6 $\mu$m-18 $\mu$m.

10. A method for preparing a positive electrode active material, comprising:

mixing a core raw material comprising a nickel source, an M source, and an M' source to obtain a mixed solution, and performing a first precipitation reaction on the mixed solution to obtain first particles;
mixing a solution formed by using an intermediate layer raw material with the first particles, and performing a second precipitation reaction to obtain second particles;
mixing a shell layer raw material comprising a nickel source and an M source, mixing the obtained mixed solution with the second particles, and performing a third precipitation reaction to obtain precursor particles; and
mixing the precursor particles with a lithium source, and performing sintering to obtain the positive electrode active material,
wherein a precipitation product formed by the second precipitation reaction on an outer surface of the first particles is formed into a porous structure through sintering;
the positive electrode active material comprises:

a core, wherein the core comprises $Li_{a1}Ni_{x1}M_{y1}M'_{z1}O_{m1}R_{n1}$, wherein $0.9 \leq a1 \leq 1.1$, $0.6 \leq x1 < 1$, $0 \leq y1 \leq 0.4$, $0 < z1 \leq 0.01$, $1.9 \leq m1 \leq 2.2$, and $0 \leq n1 \leq 0.1$; M comprises at least one element of Co, Mn, Al, Ta, Mg, Mo, Ga, Sn, Ge, Te, La, and Ce; M' comprises at least one element of Y, La, Mo, Zr, W, Sb, Nb, Te, Sr, Ti, or Ga; and R comprises at least one element of F, Cl, or S;
an intermediate layer, wherein the intermediate layer wraps at least a part of an outer surface of the core and is provided with a porous structure; and
a shell layer, wherein the shell layer wraps at least a part of an outer surface of the intermediate layer and comprises $Li_{a2}Ni_{x2}M_{y2}M'_{z2}O_{m2}R_{n2}$, wherein $0.9 \leq a2 \leq 1.1$, $0.6 \leq x2 < 1$, $0 \leq y2 \leq 0.4$, $0 \leq z2 \leq 0.01$, $1.9 \leq m2 \leq 2.2$, and $0 \leq n2 \leq 0.1$.

**11.** The method according to claim 10, wherein the intermediate layer raw material comprises an M" source, wherein the M" source comprises a compound having at least one element of B, Al, or Si.

**12.** A positive electrode plate, comprising: the positive electrode active material according to any one of claims 1-9, or the positive electrode active material prepared by the method according to claim 10 or 11.

**13.** A battery, comprising the positive electrode plate according to claim 12.

**14.** An electric device, comprising the battery according to claim 13.

FIG. 1

FIG. 2

FIG. 3

1

FIG. 4

2

1    1    1

FIG. 5

3

FIG. 6

FIG. 7

FIG. 8

## INTERNATIONAL SEARCH REPORT

| International application No. |
| --- |
| **PCT/CN2024/112806** |

| | |
| --- | --- |
| **A.** | **CLASSIFICATION OF SUBJECT MATTER** |

H01M4/36(2006.01)i; H01M4/62(2006.01)i; H01M4/505(2010.01)i; H01M4/525(2010.01)i; H01M4/131(2010.01)i; H01M10/0525(2010.01)i

According to International Patent Classification (IPC) or to both national classification and IPC

| | |
| --- | --- |
| **B.** | **FIELDS SEARCHED** |

Minimum documentation searched (classification system followed by classification symbols)

IPC:H01M4/-,H01M10/-

Documentation searched other than minimum documentation to the extent that such documents are included in the fields searched

Electronic data base consulted during the international search (name of data base and, where practicable, search terms used)

CNTXT, ENTXTC, DWPI, ENTXT, CNKI: 正极, 包覆, 涂覆, 涂层, 孔, 镍, 钴, 锰, 循环, 过渡, 金属, positive, coat+, hole?, nickel, Ni, cobalt, Co, manganese, Mn, cycle, transition metal

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 116914129 A (NINGDE CONTEMPORARY AMPEREX TECHNOLOGY CO., LTD.) 20 October 2023 (2023-10-20) entire document | 1-14 |
| Y | CN 114744164 A (CNGR ADVANCED MATERIAL CO., LTD.) 12 July 2022 (2022-07-12) description, paragraphs 6-267, and figures 1-11 | 1-14 |
| Y | CN 111653756 A (PINGNAN SHIDAI NEW MATERIAL TECHNOLOGY CO., LTD.) 11 September 2020 (2020-09-11) description, paragraphs 1-158, and figures 1-2 | 1-14 |
| Y | CN 112599779 A (SHANGHAI HUAYI (GROUP) CO., LTD.) 02 April 2021 (2021-04-02) description, paragraphs 17-32 | 2,11 |
| Y | CN 111048773 A (MCC RUIMU NEW ENERGY TECHNOLOGY CO., LTD.) 21 April 2020 (2020-04-21) description, paragraphs 4-52 | 2,11 |

☐ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 October 2024** | **05 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/112806**

| Patent document cited in search report | | | Publication date (day/month/year) | Patent family member(s) | | | Publication date (day/month/year) |
|---|---|---|---|---|---|---|---|
| CN | 116914129 | A | 20 October 2023 | CN | 116914129 | B | 13 February 2024 |
| CN | 114744164 | A | 12 July 2022 | WO | 2023142335 | A1 | 03 August 2023 |
| | | | | KR | 20230117359 | A | 08 August 2023 |
| | | | | US | 2023416110 | A1 | 28 December 2023 |
| | | | | JP | 2024507033 | W | 16 February 2024 |
| | | | | CN | 114744164 | B | 06 September 2024 |
| CN | 111653756 | A | 11 September 2020 | CN | 111653756 | B | 08 June 2021 |
| CN | 112599779 | A | 02 April 2021 | None | | | |
| CN | 111048773 | A | 21 April 2020 | CN | 111048773 | B | 15 June 2021 |

Form PCT/ISA/210 (patent family annex) (July 2022)